# EUROPEAN PATENT SPECIFICATION

(11) **EP 4 087 096 B1**
(45) Date of publication and mention of the grant of the patent: **02.12.2026**
(21) Application number: 19958441.8
(22) Date of filing: 31.12.2019
(51) Int. Cl.: H02K 3/12, H02K 3/28

(54) **STATOR WINDING STRUCTURE AND MOTOR COMPRISING SAME**
STATORWICKLUNGSSTRUKTUR UND DIESE ENTHALTENDER MOTOR
STRUCTURE D'ENROULEMENT DE STATOR, ET MOTEUR LA COMPRENANT

(43) Date of publication of application: 09.11.2022
(73) Proprietor: SAIC MOTOR Corporation Limited, Shanghai 201203 (CN)
(72) Inventor: ZHU, Jun, Shanghai 201203 (CN); WANG, Jian, Shanghai 201203 (CN); HUANG, ShaoRui, Shanghai 201203 (CN); LI, JieBao, Shanghai 201203 (CN); LI, HaoChun, Shanghai 201203 (CN); MIN, YuanLiang, Shanghai 201203 (CN)
(74) Representative: HGF
(86) International application number: PCT/CN2019/130273
(87) International publication number: WO 2021/134387

(56) References cited:
- WO-A1-2017/149935
- CN-A- 103 280 906
- CN-A- 109 586 459
- CN-A- 110 417 152
- CN-U- 209 233 596
- US-A1- 2017 033 619
- US-B2- 9 847 686

## Description

### TECHNICAL FIELD

The present application relates to a stator winding structure and a motor including such a stator winding structure, specifically to a stator winding structure with flat wire construction. The motor including such a stator winding can be used as a drive motor or a generator for a new energy vehicle, etc.

### BACKGROUND

A motor, such as an AC motor, includes a stator assembly and a rotor assembly. The stator assembly usually includes a stator winding and a stator core. The stator winding provides electrical energy input and magnetic field establishment for motor, while the stator core provides magnetic load path for motor.

In order to improve power density, heat dissipation and structural stability, the motors used in new energy vehicles often use hairpin-typed flat-wire windings, greatly increasing the slot fill rate of the stators and improving motor power density.

Flat wire windings can be adopted with different strategies or ways. In the prior art, multi-layer flat copper wire wave windings are usually used to reduce AC copper consumption in motors.

For multi-layer windings (8 layers and above), parallel winding with multiple branches in one phase is often used to match the torque and voltage characteristics of the motor. In an example of 4 parallel-winding branches with 8-layer flat copper wire, for the U-phase winding, the first parallel-winding branch is formed by connecting the first and second conductors in the corresponding slots, the second parallel-winding branch is formed by connecting the third and fourth conductors in the corresponding slots, the third parallel-winding branch is formed by connecting the fifth and sixth conductors in the corresponding slots, and the fourth parallel-winding branch is formed by connecting the seventh and eighth conductors in the corresponding slots. The above-mentioned four parallel-winding branches are connected head-to-head forming the head end of the U-phase winding and tail-to-tail forming the tail end of the U-phase winding. The U-phase is connected to the V and W phases respectively forming a Y-type three-phase winding or a delta-type three-phase winding.

Although desired torque and power can be achieved by the above-mentioned way, an unbalanced current loop between the parallel-winding branches of the same phase will be generated due to unequal electromagnetic coupling, which will cause further copper consumption and torque fluctuation and bring considerable negative impact to motor performances.

Therefore, there is an urgent need to provide a stator winding structure and a motor including a stator winding structure which can be more advantageous in at least one aspect compared to the prior art.

US 9,847,686 B2 discloses a stator for a rotating electric machine. CN 209 233 596 U discloses a motor winding and motor stator. WO 2017/149935 A1 discloses a winding structure for a rotary electric machine stator.

### SUMMARY

For the widely used 8-pole multilayer (8 layers and above) flat copper wire winding generating electrical current loop due to uneven electromagnetic coupling caused by magnetic leakage, the present invention proposes a 4-branch parallel winding structure.

Specifically, in one aspect, the present application provides a stator winding structure for a motor, the motor being a three-phase AC motor having eight poles, comprising phases U, V and W; wherein each phase comprises four parallel-winding branches: a first parallel-winding branch, a second parallel-winding branch, a third parallel-winding branch and a fourth parallel-winding branch, each parallel-winding branch having a head end and a tail end, the winding directions of the first and third parallel-winding branches being the same, and the winding directions of the second and fourth parallel-winding branches being the same and opposite to the winding directions of the first and third parallel-winding branches, the three-phase AC motor being capable of normal operation when being energized,
the stator winding structure being arranged on the stator core, the stator core comprising a plurality of slots, the stator winding comprising a plurality of U-shaped flat copper wires, wherein each U-shaped flat copper wire comprises: a first conductor, a second conductor substantially parallel to the first conductor, and a connecting part connecting the first conductor and the second conductor; wherein the connecting part of each U-shaped flat copper wire arranged in the motor is located on the same side relative to the motor,
wherein Q represents the number of slots of the stator core, the slots being numbered clockwise or counterclockwise; i represents a natural number satisfying 1 ≤ i ≤ Q; q represents the number of slots per pole per phase and p represents the number of poles and p = 8; q = (Q/p)/3 and q = 1, 2, 3...and so on; L represents the number of layers of each slot and the layers are numbered in the radial direction of the stator core (11) consecutively and the innermost layer j=1 and the outermost layer j=L, and where L is an even number and L = 8 + 4*I, where I = 0, 1, 2, 3 ..., and j is a natural number satisfying 1 ≤ j ≤ L, and y represents the pitch of the U-shaped flat copper wire; one layer in one slot corresponding to one conductor; and
wherein as seen from the side of the connecting part, two conductors of the U-shaped flat copper wire are connected as:
   - conductor of layer j in slot i being connected to conductor of layer j+1 in slot i+y in the case that j is odd and j=1, 3, 5...L-1,
   - conductor of layer j in slot i being connected to conductor of layer j-1 in slot i-y in the case that j is even and j = 2, 4, 6...L,
as seen from the solder end of the motor, two conductors being soldered or joined with deflector to form a three-phase AC motor are connected as:
   - conductor of layer j in slot i being connected to conductor of layer j+1 or j-1 in slot i+y in the case that j=2, 4, 6...L-2;
   - conductor of layer j in slot i being connected to conductor of layer j+1 or j-1 in slot i-y in the case that j=3, 5...L-1;
   - conductor of layer j in slot i being connected to conductor of layer j-1 in slot i+y or to layer 1 in slot i+y+1 or i+y-1 in the case that j=L,
   - conductor of layer j in slot i being connected to conductor of layer j+1 in slot i-y or to layer L in slot i-y+1 or i-y-1 in the case that j =1,
where the value of i depends on the phase of the winding and the branch number, and where i-y = i-y+Q when i-y < 0 and i+y = i+y-Q when i+y > Q.

In a further aspect, the present application provides a stator winding structure for a motor, the motor being a three-phase AC motor having eight poles, comprising phases U, V and W; wherein each phase comprises four parallel-winding branches: a first parallel-winding branch, a second parallel-winding branch, a third parallel-winding branch and a fourth parallel-winding branch, each parallel-winding branch having a head end and a tail end, the winding directions of the first and third parallel-winding branches being the same, and the winding directions of the second and fourth parallel-winding branches being the same and both opposite to the winding directions of the first and third parallel-winding branches, the three-phase AC motor being capable of normal operation when being energized,
the stator winding structure being arranged on the stator core, the stator core comprising a plurality of slots, the stator winding comprising a plurality of U-shaped flat copper wires, wherein each U-shaped flat copper wire comprises: a first conductor, a second conductor substantially parallel to the first conductor, and a connecting part connecting the first conductor and the second conductor; wherein the connecting part of each U-shaped flat copper wire arranged in the motor is located on the same side relative to the motor,
wherein Q represents the number of slots of the stator core, the slots being numbered clockwise or counterclockwise; i represents a natural number satisfying 1 ≤ i ≤ Q; q represents the number of slots per pole per phase and p represents the number of poles and p = 8; q = (Q/p)/3 and q = 1, 2, 3...and so on; L represents the number of layers of each slot and the layers are numbered in the radial direction of the stator core (11) consecutively and the innermost layer j=1 and the outermost layer j=L, where L is an even number and L = 8 + 4*I, where I = 0, 1, 2, 3 ..., j is a natural number satisfying 1 ≤ j ≤ L; and y represents the pitch of the U-shaped flat copper wire; one layer in one slot corresponding to one conductor,
as seen from the side of the solder end, two conductors being soldered together to form a three-phase AC motor with 8 poles and including four parallel-winding branches per phase are connected as:
   - conductor of layer j in slot i being connected to conductor of layer j+1 in slot i+y in the case that j is odd and j=1, 3, 5...L-1,
   - conductor of layer j in slot i being connected to conductor of layer j-1 in slot i-y in the case that j is even and j=2, 4, 6...L,
as seen from the side of the motor with the connecting part, two conductors are connected with deflector or connecting part as:
   - conductor of layer j in slot i being connected to conductor of layer j+1 or j-1 in slot i+y in the case that j=2, 4, 6...L-2,
   - conductor of layer j in slot i being connected to conductor of layer j+1 or j-1 in slot i-y in the case that j=3, 5...L-1,
   - conductor of layer j in slot i being connected to conductor of layer j-1 in slot i+y or to conductor of layer 1 in slot i+y+1 or i+y-1 in the case that j=L,
   - conductor of layer j in slot i being connected to conductor of layer j+1 in slot i-y or to layer L in slot i-y+1 or i-y-1 in the case that j =1,
where the value of i depends on the phase of the winding and the branch number and where i-y = i-y+Q when i-y < 0 and i+y = i+y-Q when i+y > Q.

Optionally, each of the conductors of the first parallel-winding branch and the third parallel-winding branch at head ends is located in an odd layer of slot i±2ky, respectively, where k=0, 1, 2, 3...and so on; and wherein each of the conductors of the second parallel-winding branch and the fourth parallel-winding branch at head ends is located in an even layer of stator i±2ky , where k=0, 1, 2, 3...and so on.

Optionally, the head and tail ends of the first parallel-winding branch, the second parallel-winding branch, the third parallel-winding branch and the fourth parallel-winding branch are located in layer 1 or layer L.

Optionally, the head ends of two of the four parallel-winding branches are located in layer 1 and layer L of slot i respectively; and the head ends of the other two of the four parallel-winding branches are located in layer 1 and layer L of slot i+Q/2, respectively.

Optionally, the stator winding structure is configured as a Y-type winding structure connected in a tail-to-tail manner or a delta-type winding structure connected in a head-to-tail manner.

Optionally, the stator winding structure is a full pitch winding structure, a short pitch winding structure or a long pitch winding structure.

**In** a further aspect, the present application provides a motor comprising a stator winding structure according to the above.

Optionally, the motor includes 48 stator slots, each stator slot having 8 layers.

Optionally, phase U comprises four parallel-winding branches: a first parallel-winding branch of phase U, a second parallel-winding branch of phase U, a third parallel-winding branch of phase U and a fourth parallel-winding branch of phase U; "^" representing connection with connecting part of a U-shaped flat copper wire, "- " representing connection by soldering, "↔" representing connection by deflector, and "i.j" denoting layer j in slot i; and wherein
the first parallel-winding branch of phase U is connected as:
   1.1^7.2-13.1^19.2-25.3^31.4-37.3^43.4-1.5^7.6-13.5^19.6-25.7^31.8-37.7^43.8↔2. 1^8.2-14.1^20.2-26.3^32.4-38.3^44.4-2.5^8.6-14.5^20.6-26.7^32.8-38.7^44.8;
the second parallel-winding branch of phase U is connected as:
   1.8^43.7-37.8^31.7-25.6^19.5-13.6^7.5-1.4^43.3-37.4^31.3-25.2^19.1-13.2^7.1↔2. 8^44.7-38.8^32.7-26.6^20.5-14.6^8.5-2.4^44.3-38.4^32.3-26.2^20.1-14.2^8.1;
the third parallel-winding branch of phase U is connected as:
   25.1^31.2-37.1^43.2-1.3^7.4-13.3^19.4-25.5^31.6-37.5^43.6-1.7^7.8-13.7^19.8↔2 6.1^32.2-38.1^44.2-2.3^8.4-14.3^20.4-26.5^32.6-38.5^44.6-2.7^8.8-14.7^20.8;
the fourth parallel-winding branch of phase U is connected as:
   25.8^19.7-13.8^7.7-1.6^43.5-37.6^31.5-25.4^19.3-13.4^7.3-1.2^43.1-37.2^31.1↔2 6.8^20.7-14.8^8.7-2.6^44.5-38.6^32.5-26.4^20.3-14.4^8.3-2.2^44.1-38.2^32.1.

Optionally, phase U comprises four parallel-winding branches: a first parallel-winding branch of phase U , a second parallel-winding branch of phase U, a third parallel-winding branch of phase U and a fourth parallel-winding branch of phase U; "^" representing connection with connecting part of a U-shaped flat copper wire, "- " representing connection by soldering, "↔" representing connection by deflector, and "i.j" denoting layer j in slot i; and wherein
the first parallel-winding branch of phase U is connected as:
   13.1^19.2-25.3^31.4-37.3^43.4-1.5^7.6-13.5^19.6-25.7^31.8-37.7^43.8↔2.1^8.2-1 4.1^20.2-26.3^32.4-38.3^44.4-2.5^8.6-14.5^20.6-26.7^32.8-38.7^44.8↔1.1^7.2;
the second parallel-winding branch of phase U is connected as:
   1.8^43.7-37.8^31.7-25.6^19.5-13.6^7.5-1.4^43.3-37.4^31.3-25.2^19.1-13.2^7.1↔2. 8^44.7-38.8^32.7-26.6^20.5-14.6^8.5-2.4^44.3-38.4^32.3-26.2^20.1-14.2^8.1;
the third parallel-winding branch of phase U is connected as:
   13.3^19.4-25.5^31.6-37.5^43.6-1.7^7.8-13.7^19.8↔26.1^32.2-38.1^44.2-2.3^8.4-1 4.3^20.4-26.5^32.6-38.5^44.6-2.7^8.8-14.7^20.8↔25.1^31.2-37.1^43.2-1.3^7.4;
the fourth parallel-winding branch of phase U is connected as:
   1.6^43.5-37.6^31.5-25.4^19.3-13.4^7.3-1.2^43.1-37.2^31.1↔26.8^20.7-14.8^8.7-2. 6^44.5-38.6^32.5-26.4^20.3-14.4^8.3-2.2^44.1-38.2^32.1↔25.8^19.7-13.8^7.7.

Optionally, phase U comprises four parallel-winding branches: a first parallel-winding branch of U phase , a second parallel-winding branch of phase U, a third parallel-winding branch of phase U and a fourth parallel-winding branch of phase U; "^" representing connection with connecting part of a U-shaped flat copper wire, "- " representing connection by soldering, "↔" representing connection by deflector, and "i.j" denoting layer j in slot i; and wherein
the first parallel-winding branch of phase U is connected as:
   8.1-14.2^20.1-26.2^32.3-38.4^44.3-2.4^8.5-14.6^20.5-26.6^32.7-38.8^44.7-2.8↔7. 1-13.2^19.1-25.2^31.3-37.4^43.3-1.4^7.5-13.6^19.5-25.6^31.7-37.8^43.7-1.8;
the second parallel-winding branch of phase U is connected as:
   44.8-38.7^32.8-26.7^20.6-14.5^8.6-2.5^44.4-38.3^32.4-26.3^20.2-14.1^8.2-2.1↔43 .8-37.7^31.8-25.7^19.6-13.5^7.6-1.5^43.4-37.3^31.4-25.3^19.2-13.1^7.2-1.1;
the third parallel-winding branch of phase U is connected as:
   32.1-38.2^44.1-2.2^8.3-14.4^20.3-26.4^32.5-38.6^44.5-2.6^8.7-14.8^20.7-26.8↔31 .1-37.2^43.1-1.2^7.3-13.4^19.3-25.4^31.5-37.6^43.5-1.6^7.7-13.8^19.7-25.8;
the fourth parallel-winding branch of phase U is connected as:
   20.8-14.7^8.8-2.7^44.6-38.5^32.6-26.5^20.4-14.3^8.4-2.3^44.2-38.1^32.2-26.1↔19 .8-13.7^7.8-1.7^43.6-37.5^31.6-25.5^19.4-13.3^7.4-1.3^43.2-37.1^31.2-25.1.

In a further aspect, the present application provides a vehicle comprising a motor according to the above.

Both of the stator winding structure and the motor including the stator winding structure provided in this application are able to achieve the purpose of weakening and reducing electrical current loop, reducing additional copper consumption caused by the electrical current loop, and improving motor performance, etc.

In addition, the winding structure and the motor including the stator winding structure claimed to be protected by this application enable conductors of the same branch circuit to be distributed in the circumferential direction in each conductor layer of the stator slot. With connecting conductors located at different radius positions in the stator slot to each other, it is possible to achieve at least one of the following purposes: improving heat dissipation capacity of conductors in the stator slot away from the coolant, balancing temperature difference between layers of conductors, increasing continuous power and power density of the motor, reducing heat radiation from stators to rotors, controlling rotor temperature, and reducing end size of armature to some extent.

### BRIEF DESCRIPTION OF THE DRAWINGS

**Fig. 1** illustrates a schematic diagram of a U-shaped flat copper wire according to an embodiment of the present application.
**Fig. 2** illustrates a circuit diagram of a stator winding according to an embodiment of the present application, wherein each of the U, V and W phases includes four parallel-winding branches.
**Fig. 3** illustrates a perspective view of a stator according to Example I of the present application, with solder ends being located on the top.
**Fig. 4** illustrates a perspective view of the stator according to Example I of the present application, with U-shaped end being located on the top.
**Fig. 5** illustrates a perspective view of the stator winding structure according to Example I of the present application, wherein only the U-phase winding is shown.
**Fig. 6** illustrates a perspective view of the stator winding structure of FIG. 5, wherein the iron core is shown.
**Fig. 7A** illustrates a perspective view of the deflector for use in Example 1 of the present application.
**Fig. 7B** illustrates internal wirings of the deflector of FIG. 7A.
**Fig. 7C** illustrates the deflector of FIG. 7A, wherein only the U-phase outgoing line inside the deflector is shown.
**Fig. 7D** illustrates the deflector of FIG. 7A, wherein only the neutral line within the deflector is shown.
**Fig. 8A** illustrates the wiring structure of a first parallel-winding branch of the U-phase winding according to Example I of the present application.
**Fig. 8B** illustrates the wiring structure of a second parallel-winding branch of the U-phase winding according to Example I of the present application.
**Fig. 8C** illustrates the wiring structure of a third parallel-winding branch of the U-phase winding according to Example I of the present application.
**Fig. 8D** illustrates the wiring structure of a fourth parallel-winding branch of the U-phase winding according to Example I of the present application.
**Fig. 9A** illustrates the diagram of wiring expansion at the U-shaped end of the first parallel-winding branch of the U-phase winding according to Example I of the present application .
**Fig. 9B** illustrates the diagram of wiring expansion at the U-shaped end of the second parallel-winding branch of the U-phase winding according to Example 1 of the present application.
**Fig. 9C** illustrates the diagram of wiring expansion at the U-shaped end of the third parallel-winding branch of the U-phase winding according to Example 1 of the present application.
**Fig. 9D** illustrates the diagram of wiring expansion at the U-shaped end of the fourth parallel-winding branch of the U-phase winding according to Example 1 of the present application.
**Fig. 10** illustrates a perspective view of the stator according to Example II of the present application, with solder end at the top.
**Fig. 11** illustrates a perspective view of the stator according to Example II of the present application, with U-shaped end at the top.
**Fig. 12** illustrates a perspective view of the stator winding structure according to Example II of the present application, wherein only the U-phase winding is shown.
**Fig. 13** illustrates a perspective view of the stator winding structure of FIG. 12, wherein the iron core is shown.
**Fig. 14A** illustrates a perspective view of the deflector for use in Example II of the present application.
**Fig. 14B** illustrates internal wirings of the deflector of FIG. 14A.
**Fig. 14C** illustrates the deflector of FIG. 14A, wherein only the U-phase outgoing line within the deflector is shown.
**Fig. 14D** illustrates the deflector of FIG. 14A, wherein only the neutral line within the deflector is shown.
**Fig. 15A** illustrates the wiring structure of a first parallel-winding branch of the U-phase winding according to Example II of the present application.
**Fig. 15B** illustrates the wiring structure of a second parallel-winding branch of the U-phase winding according to Example II of the present application.
**Fig. 15C** illustrates the wiring structure of a third parallel-winding branch of the U-phase winding according to Example II of the present application.
**Fig. 15D** illustrates the wiring structure of a fourth parallel-winding branch of the U-phase winding according to Example II of the present application.
**Fig. 16A** illustrates the diagram of wiring expansion at the U-shaped end of the first parallel-winding branch of the U-phase winding according to Example II of the present application.
**Fig. 16B** illustrates the diagram of wiring expansion at the U-shaped end of the second parallel-winding branch of the U-phase winding according to Example II of the present application.
**Fig. 16C** illustrates the diagram of wiring expansion at the U-shaped end of the third parallel-winding branch of the U-phase winding according to Example II of the present application.
**Fig. 16D** illustrates the diagram of wiring expansion at the U-shaped end of the fourth parallel-winding branch of the U-phase winding according to Example II of the present application.
**Fig. 17** illustrates a perspective view of the stator according to Example III of the present application, with the U-shaped end at the top.
**Fig. 18** illustrates a perspective view of the stator according to Example III of the present application, with the solder end at the top.
**Fig. 19** illustrates a perspective view of the stator winding structure according to Example III of the present application, wherein only the U-phase winding is shown.
**Fig. 20** illustrates a perspective view of the stator winding structure of FIG. 19, wherein the iron core is shown.
**Fig. 21A** illustrates the wiring structure of the first parallel-winding branch of the U-phase winding according to Example III of the present application.
**Fig. 21B** illustrates the wiring structure of a second parallel-winding branch of the U-phase winding according to Example III of the present application.
**Fig. 21C** illustrates the wiring structure of a third parallel-winding branch of the U-phase winding according to Example III of the present application.
**Fig. 21D** illustrates the wiring structure of a fourth parallel-winding branch of the U-phase winding according to Example III of the present application.
**Fig. 22A** illustrates the diagram of wiring expansion at the U-shaped end of the first parallel-winding branch of the U-phase winding according to Example III of the present application.
**Fig. 22B** illustrates the diagram of wiring expansion at the U-shaped end of the second parallel-winding branch of the U-phase winding according to Example III of the present application.
**Fig. 22C** illustrates the diagram of wiring expansion at the U-shaped end of the third parallel-winding branch of the U-phase winding according to Example III of the present application.
**Fig. 22D** illustrates the diagram of wiring expansion at the U-shaped end of the fourth parallel-winding branch of the U-phase winding according to Example III of the present application.

### DETAILED DESCRIPTION

Some possible embodiments of the present application are described below with reference to the accompanying drawings. It should be noted that the figures are not drawn to scale. Some details may have been enlarged for clarity, and some details not necessary to be shown have been omitted.

A motor includes a stator and a rotor (not shown). The stator includes a stator core 11 and a stator winding structure 100. The stator core 11 has a plurality of slots circumferentially distributed.

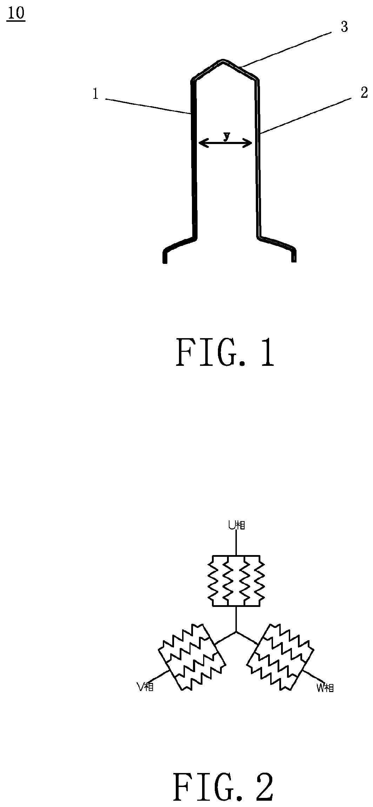

The stator winding structure 100 comprises a plurality of U-shaped flat copper wires 10 shown in Fig. 1. The U-shaped flat copper wire 10 has a pitch of y.

The U-shaped flat copper wire 10 comprises: a first conductor 1 and a second conductor 2 and a connecting part 3. In the orientation shown in Fig. 1, the first conductor 1 is at the left side and the second conductor 2 is at the right side. With the connecting part 3, the first conductor 1 is connected to the second conductor 2.

In the present application, the end with the connecting part 3 is the U-shaped end (top of Fig. 1) and the opposite end (without the connecting part) is the solder end (bottom of Fig. 1).

In this disclosure, the stator winding structure 100 of the stator comprises a three-phase (U, V and W phases) winding structure with a phase difference of 120° electrical angle, and the stator winding structure 100 is arranged in the slots of the stator core 11.

Each phase of the three-phase winding comprises four parallel-winding branches wound on the core 11: a first parallel-winding branch, a second parallel-winding branch, a third parallel-winding branch and a fourth parallel-winding branch. The first and third parallel-winding branches have the same winding direction, and the second and fourth parallel-winding branches have the same winding direction and are both opposite to the winding direction of the first and third parallel-winding branches. The three-phase AC motor is able to operate normally when energized.

According to different needs, the three-phase winding may be formed as a Y-type winding with tail-to-tail connection or as a delta-type winding with head-to-tail connection. In the disclosure of this application, the Y-type winding connection is used for illustrative reasons (as shown in Fig. 2), but the scope of protection of this application also includes delta-type windings.

The slot number of the motor is represented as Q. As may be known, the start of slots can be any slot and the number can be incremented clockwise or counterclockwise. The number of pairs of pole is represented as P (number of poles is represented as p, and p=2*P=8), the pole pitch represented as τ and τ= Q/p, the pitch of the full pitch winding represented as y, and y=τ. Each phase of the winding structure includes a plurality of in-slot conductors that are all inserted into the slots of the stator core 11. In each slot of the stator core 11, there are arranged L (L represents the number of layers) layers for conductor sections, where L is an even number and L = 8 + 4*I (I = 0, 1, 2, 3...and so on (I is a natural number)). q represents the number of slots per pole per phase, where q = (Q/p)/3 and q = 1, 2, 3...and so on (that is to say, q is a natural number started from 1).

According to an embodiment of the present application, the connecting part 3(U-shaped end) of each of the plurality of U-shaped flat copper wires 10 constituting the stator winding structure 100 is at the first side of the motor. Similarly, the solder end of each of the plurality of U-shaped flat copper wires 10 constituting the stator winding structure 100 is at the second side of the motor, wherein the second side is opposite to the first side.

In one embodiment of the present application, as seen from the side of the connecting part 3 (the first side), two conductors 1, 2 of the U-shaped flat copper wire are connected as:
- conductor of layer j in slot i being connected to conductor of layer j+1 in slot i+y in the case that j is odd and j=1, 3, 5...L-1,
- conductor of layer j in slot i being connected to conductor of layer j-1 in slot i-y in the case that j is even and j = 2, 4, 6... L.
where the value of i is a function of the phase of the winding and the branch number, and where i-y = i-y+Q when i-y < 0 and i+y = i+y-Q when i+y > Q.

Accordingly, as seen from the solder end of the motor (the second side), two conductors being soldered or joined with deflector to form the three-phase AC motor are connected as:
- conductor of layer j in slot i being connected to conductor of layer j+1 or j-1 in slot i+y in the case that j=2, 4, 6...L-2;
- conductor of layer j in slot i being connected to conductor of layer j+1 or j-1 in slot i-y in the case that j=3, 5...L-1;
- conductor of layer j in slot i being connected to conductor of layer j-1 in slot i+y or to layer 1 in slot i+y+1 or i+y-1 in the case that j=L,
- conductor of layer j in slot i being connected to conductor of layer j+1 in slot i-y or to layer L in slot i-y+1 or i-y-1 in the case that j =1,
where the value of i is a function of the phase of the winding and the branch number, and where i-y = i-y+Q when i-y < 0 and i+y = i+y-Q when i+y > Q.

Alternatively, in another embodiment of the present application, as seen from the side with the solder end (the second side), two conductors 1, 2 being soldered together to form a three-phase AC motor with a pole number of 8 and including four parallel-winding branches per phase are connected as
- conductor of layer j in slot i being connected to conductor of layer j+1 in slot i+y in the case that j is odd and j=1, 3, 5...L-1.
- conductor of layer j in slot i being connected to conductor of layer j-1 in slot i-y in the case that j is even and j=2, 4, 6...L,
where the value of i is a function of the phase of the winding and the branch number and where i-y = i-y+Q when i-y < 0 and i+y = i+y-Q when i+y > Q.

Accordingly, as seen from the side of the motor with the connecting part (the first side), two conductors 1, 2 are connected with deflector or connecting part 3 as:
- conductor of layer j in slot i being connected to conductor of layer j+1 or j-1 in slot i+y in the case that j=2, 4, 6...L-2;
- conductor of layer j in slot i being connected to conductor of layer j+1 or j-1 in slot i-y in the case that j=3, 5...L-1;
- conductor of layer j in slot i being connected to conductor of layer j-1 in slot i+y or to conductor of layer 1 in slot i+y+1 or i+y-1 in the case that j=L;
- conductor of layer j in slot i being connected to conductor of layer j+1 in slot i-y or to layer L in slot i-y+1 or i-y-1 in the case that j =1,
where the value of i is a function of the phase of the winding and the branch number and where i-y = i-y+Q when i-y < 0 and i+y = i+y-Q when i+y > Q.

For the four parallel-winding branches included in each phase, each of the first conductors of the first and the third parallel-winding branches is located in an odd layer of an i±2ky stator slot (k=0, 1, 2, ...) respectively; each of the first conductors of the second and the fourth parallel-winding branches is located in in an even layer of an i±2ky stator slot (k=0, 1, 2, ...) respectively. Note that one layer in one slot corresponds to one conductor, as is known to those skilled in the art. The corresponding end positions can be deduced from the connection of the conductors as described above and are therefore not repeated.

Alternatively, each of the first ends of the second and the fourth parallel-winding branches is located in an odd layer of an i±2ky stator slot (k=0, 1, 2...) respectively; each of the first ends of the first and the third parallel-winding branches is located in an even layer of an i±2ky stator slot (k=0, 1, 2...) respectively. Note that, as known to those skilled in the art, one layer in one slot corresponds to one conductor. The corresponding end positions can be deduced from the connection of the conductors as described above and are therefore not repeated.

All wiring structures derived from the above are within the scope of protection of this application.

In one embodiment, the winding structure is configured such that all head and tail ends of the 4 parallel-winding branches are located in the first or Lₜₕ layer of the stator slot. For example, the head ends of two of the four parallel-winding branches are located in layer 1 and layer L of the iₜₕ stator slot respectively; and accordingly, the tail ends of the two parallel-winding branches are located in layer L of stator slot i-y+1 and layer 1 of stator slot i+y+1, respectively; the head ends of the other two parallel-winding branches of the four parallel-winding branches are located in layer 1 and layer L of stator slot i+Q/2 respectively; and accordingly, the tail ends of the other two parallel-winding branches are located in layer L of stator slot i+Q/2-y+1 and layer 1 of stator slot i+Q/2+y+1, respectively.

Optionally, each parallel-winding branch for each phase of the winding structure may be viewed as consisting of secondary branches with the number of qL/2 connected in series.

A deflector 12 is used to connect respective conductors during constructing of the stator winding structure 100 disclosed in this application. The deflector 12 may be any suitable deflector known in the art.

For better understanding of the present invention, the following three examples are shown, taking as an example an 8-layer (numbered as layer 1 to 8, respectively) winding with 8 poles and 48 slots (numbered as slot 1 to 48, respectively). Of course, the scope of protection of the present invention is not limited to the three examples below.

### Example I

In this example of a three-phase AC motor, a stator includes a stator core 11 and a stator winding structure 100. The stator core 11 has a plurality of slots distributed thereon circumferentially. The stator winding structure 100 consists of a plurality of U-shaped flat copper wires 10.

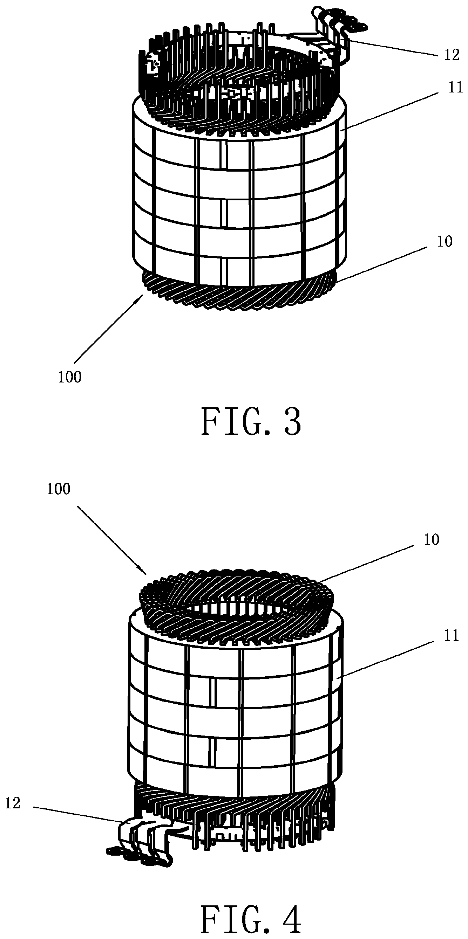

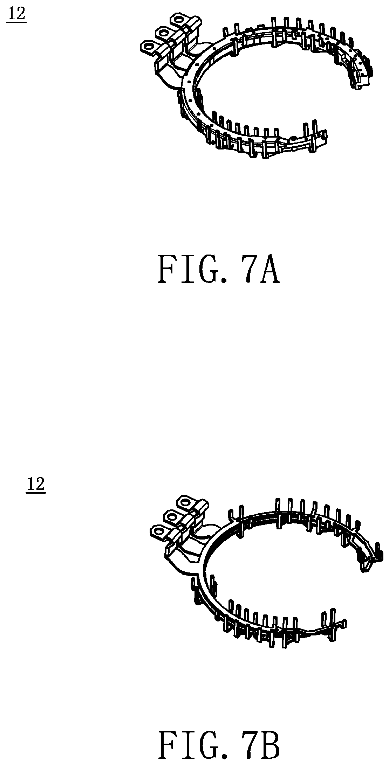

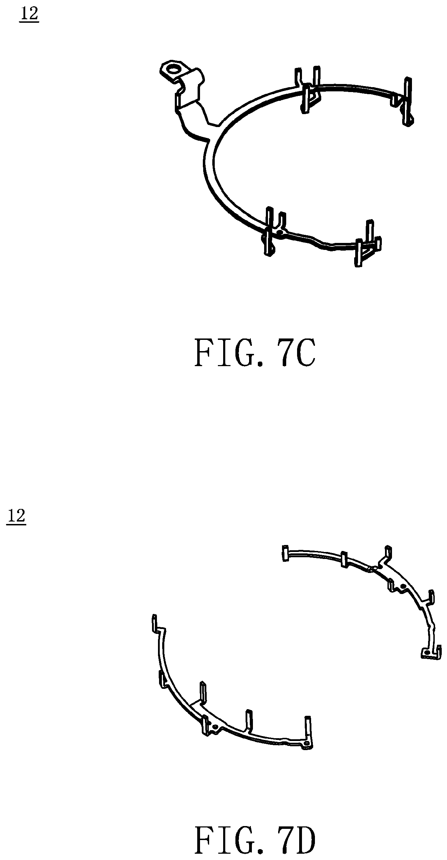

The outlet wires of the three phases (U, V and W phases) of the stator are at the soldered ends of the U-shaped flat copper wires 10 of the stator winding structure 100. Accordingly, a deflector 12 (as shown in Figs. 7A-7D) is also arranged at the solder end for the outlet wires of each phase. The stator of Example 1 is shown in Figs. 3-4.

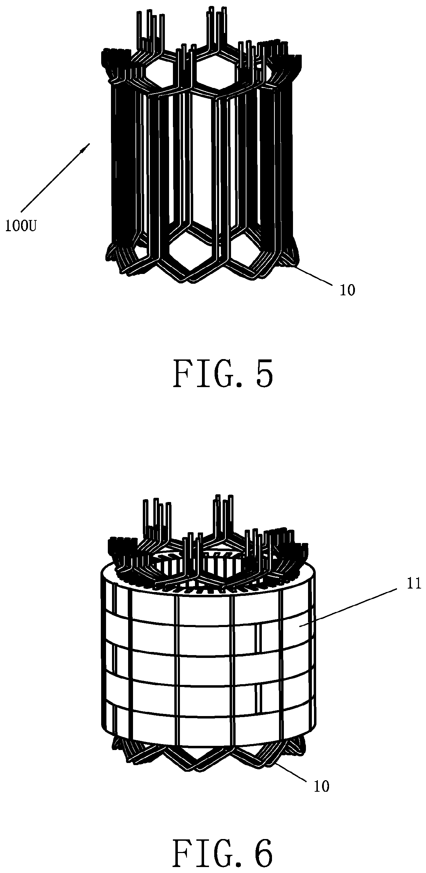

A perspective view, a wiring structure, and an expansion diagram from the U-shaped end (first side) of the four parallel-winding branches of the U-phase winding structure 100U of Example I are shown in Figs. 5-6, Figs. 8A-8D and Figs. 9A-9D respectively.

Each phase includes four parallel-winding branches: a first parallel-winding branch, a second parallel-winding branch, a third parallel-winding branch and a fourth parallel-winding branch respectively.

The first parallel-winding branch of the winding structure of phase U is connected in the following way as partially shown:
conductor of layer 1 in slot 1 being connected to the conductor of layer 2 in slot 7 at the U-shaped end by connecting part with pitch y;
conductor of layer 2 in slot 7 being connected to the conductor of layer 1 in slot 13 at the solder end by soldering;
conductor of layer 1 in slot 13 being connected to the conductor of layer 2 in slot 19 at the U-shaped end by connecting part with pitch y;
conductor of layer 2 in slot 19 being connected to the conductor of layer 3 in slot 25 by soldering at the solder end;
conductor of layer 3 in slot 25 being connected to the conductor of layer 4 in slot 31 at the U-shaped end by connecting part with pitch y.

According to the above, the complete connection of Example 1 can be seen as follows.

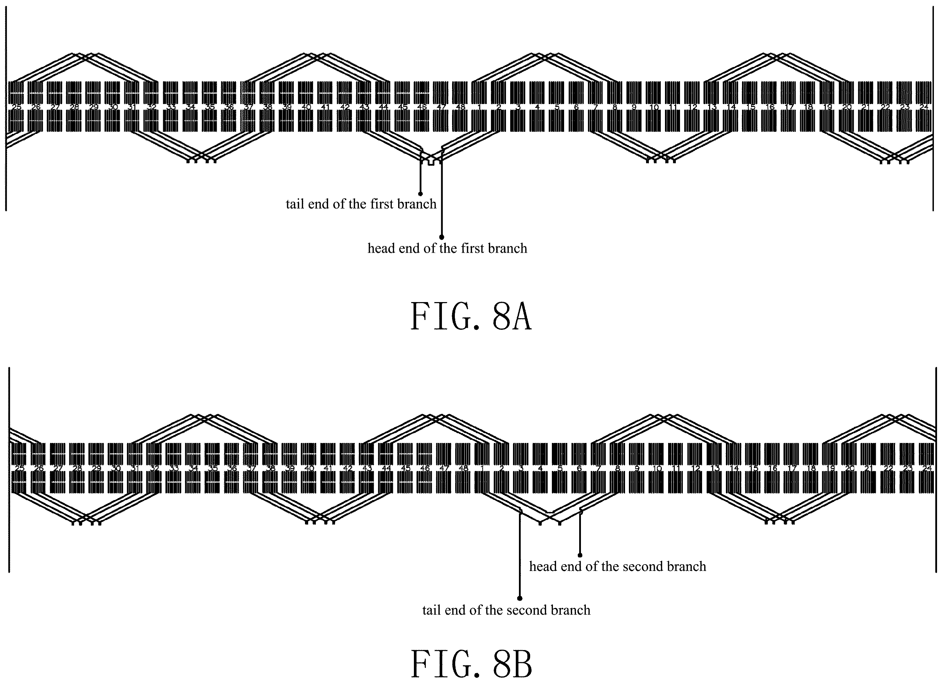

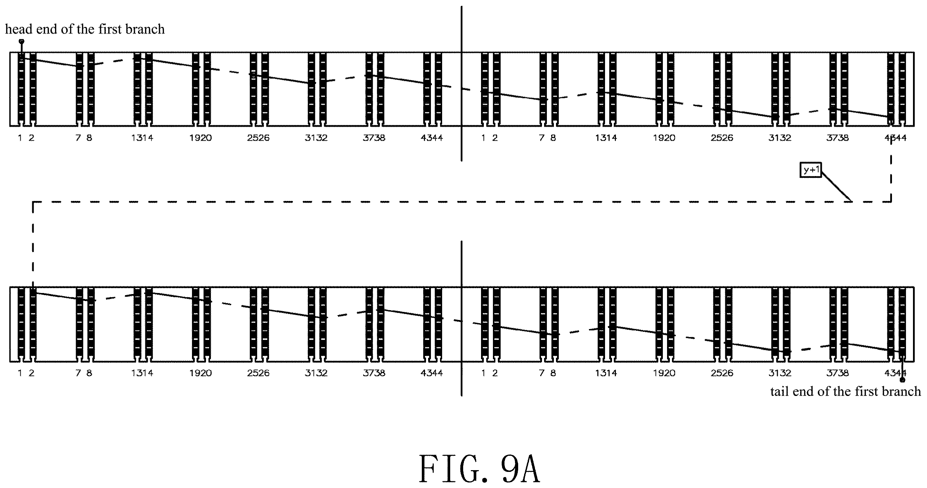

As shown in Fig. 8A and Fig. 9A, the first parallel-winding branch of phase U is connected as:
1.1^7.2-13.1^19.2-25.3^31.4-37.3^43.4-1.5^7.6-13.5^19.6-25.7^31.8-37.7^43.8↔2. 1^8.2-14.1^20.2-26.3^32.4-38.3^44.4-2.5^8.6-14.5^20.6-26.7^32.8-38.7^44.8 (Note: "^" represents connected with connecting part, "-" represents connected by soldering, "↔" represents connected with deflector);

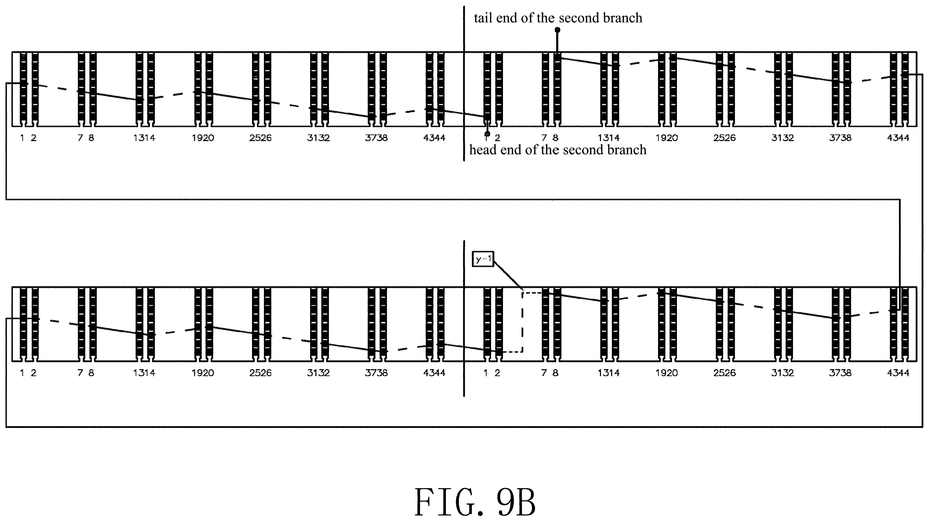

As shown in Fig. 8B and Fig. 9B, the second parallel-winding branch of Phase U is connected as:
1.8^43.7-37.8^31.7-25.6^19.5-13.6^7.5-1.4^43.3-37.4^31.3-25.2^19.1-13.2^7.1↔2. 8^44.7-38.8^32.7-26.6^20.5-14.6^8.5-2.4^44.3-38.4^32.3-26.2^20.1-14.2^8.1 (Note: "^" represents connected with connecting part, "-" represents connected by soldering, "↔" represents connected with deflector);

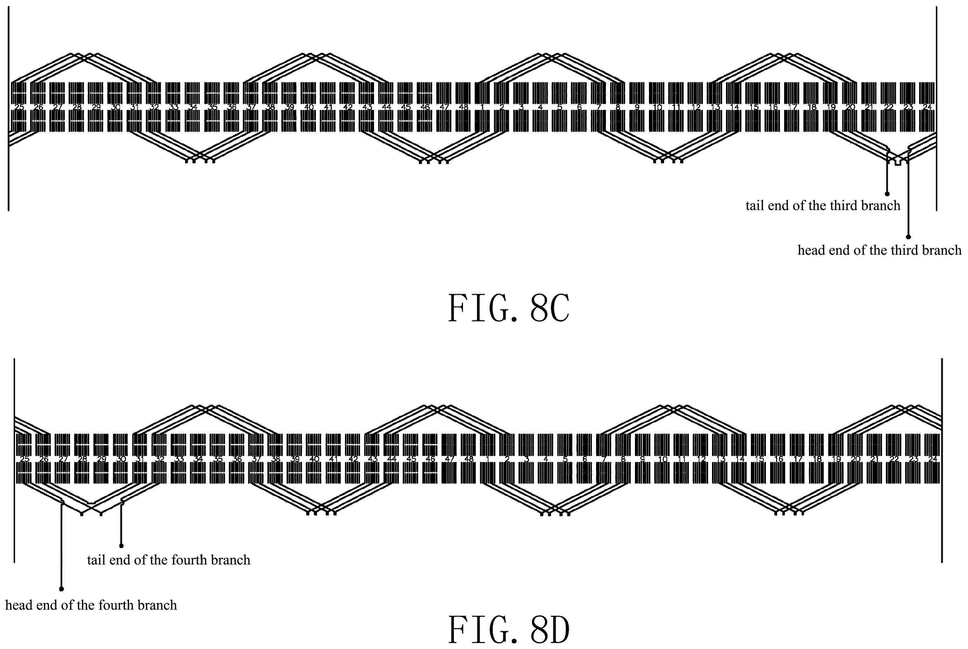

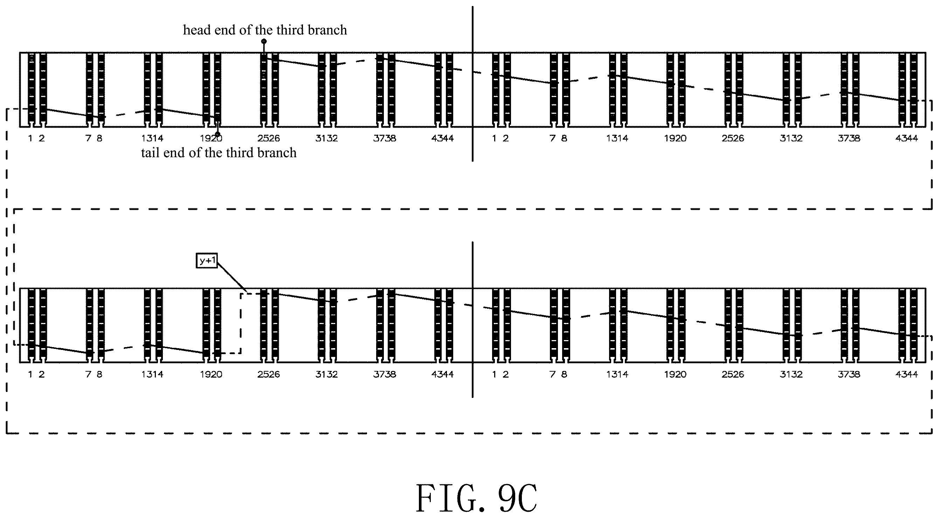

As shown in Fig. 8C and Fig. 9C, the third parallel-winding branch of phase U is connected as:
25.1^31.2-37.1^43.2-1.3^7.4-13.3^19.4-25.5^31.6-37.5^43.6-1.7^7.8-13.7^19.8↔2 6.1^32.2-38.1^44.2-2.3^8.4-14.3^20.4-26.5^32.6-38.5^44.6-2.7^8.8-14.7^20.8 (Note: "^" represents connected with connecting part, "-" represents connected by soldering, "↔" represents connected with deflector);

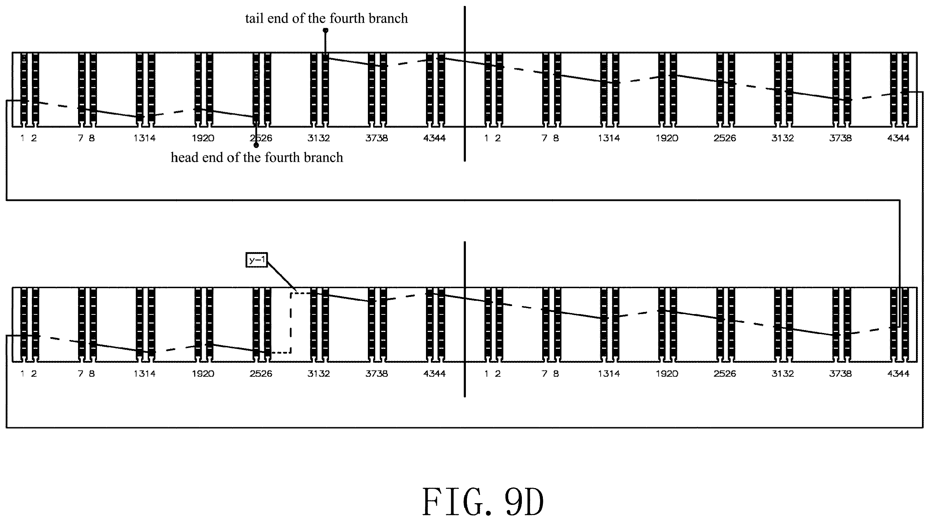

As shown in Fig. 8D and Fig. 9D, the fourth parallel-winding branch of phase U is connected as:
25.8^19.7-13.8^7.7-1.6^43.5-37.6^31.5-25.4^19.3-13.4^7.3-1.2^43.1-37.2^31.1↔2 6.8^20.7-14.8^8.7-2.6^44.5-38.6^32.5-26.4^20.3-14.4^8.3-2.2^44.1-38.2^32.1 (Note: "^" represents connected with connecting part, "-" represents connected by soldering, "↔" represents connected with deflector).

The winding structures of Phase V and Phase W can be obtained according to the above patterns, and thus not repeated here.

### Example II

In this example of a three-phase AC motor, a stator comprises a stator core 11 and a stator winding structure 100. The stator core 11 has a plurality of slots distributed thereon circumferentially. The stator winding structure 100 consists of a plurality of U-shaped flat copper wires 10.

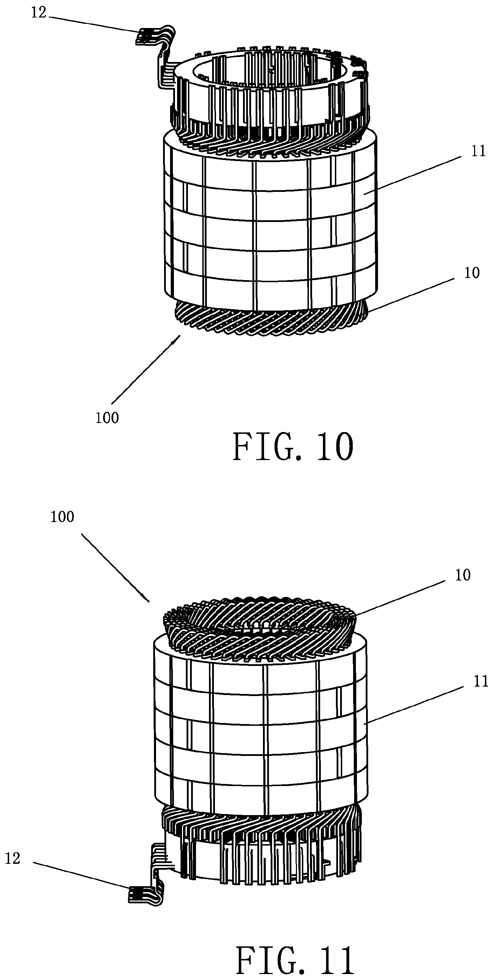

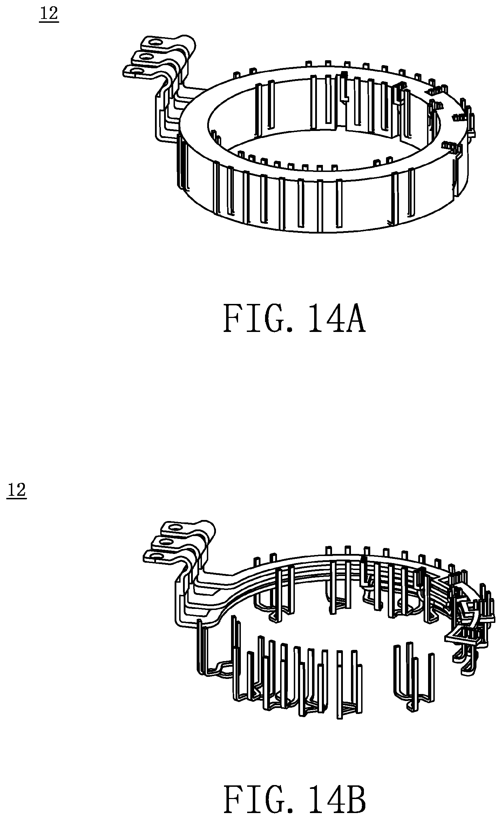

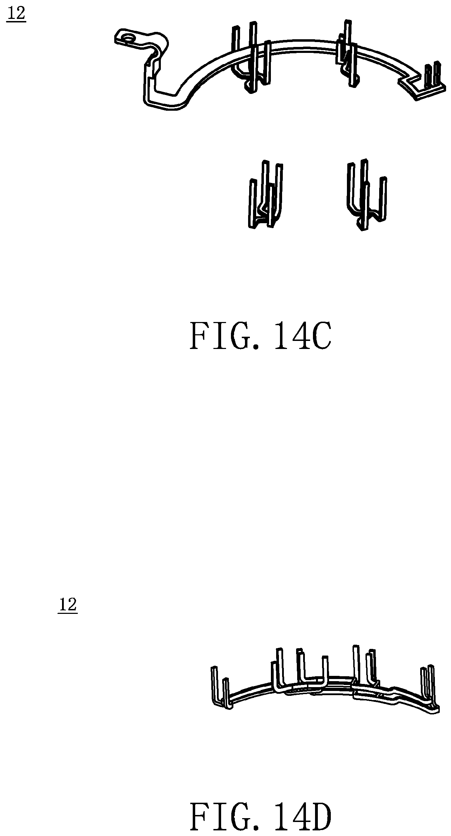

The outlet wires of the three phases (U, V and W phases) of the stator are at the soldered ends of the U-shaped flat copper wires 10 of the stator winding structure 100. Accordingly, a deflector 12 (shown in Figs. 14A-14D) is also arranged at the solder end for the outlet wires of each phase. The stator of Example II is shown in Figs. 10-11.

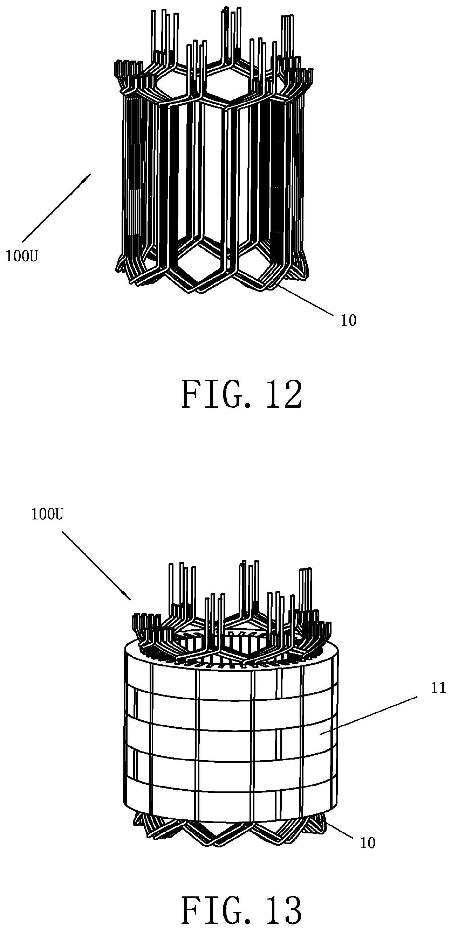

A perspective view, a wiring structure and an expansion diagram from the U-shaped end (first side) of the four parallel-winding branches of the U-phase winding structure 100U of Example II are shown in Figs.12-13, Figs. 15A-15D and Figs. 16A-16D, respectively.

Each phase includes four parallel-winding branches: a first parallel-winding branch, a second parallel-winding branch, a third parallel-winding branch and a fourth parallel-winding branch, respectively.

The first parallel-winding branch of the winding structure of phase U is connected in the following way partially shown as:
conductor of layer 1 in slot 13 being connected to conductor of layer 2 in slot 19 at the U-shaped end with connecting part with pitch y;
conductor of layer 2 in slot 19 being connected to conductor of layer 3 in slot 25 at the solder end by soldering.
conductor of layer 3 in slot 25 being connected to conductor of layer 4 in slot 31 at the U-shaped end with a connecting part with pitch y;
conductor of layer 4 in slot 31 being connected to conductor of layer 3 in slot 37 at the solder end by soldering.
conductor of layer 3 in slot 37 being connected to the conductor of layer 4 in slot 43 at the U-shaped end by connecting part with pitch y.

According to the above, the complete connection of Example II can be seen as follows.

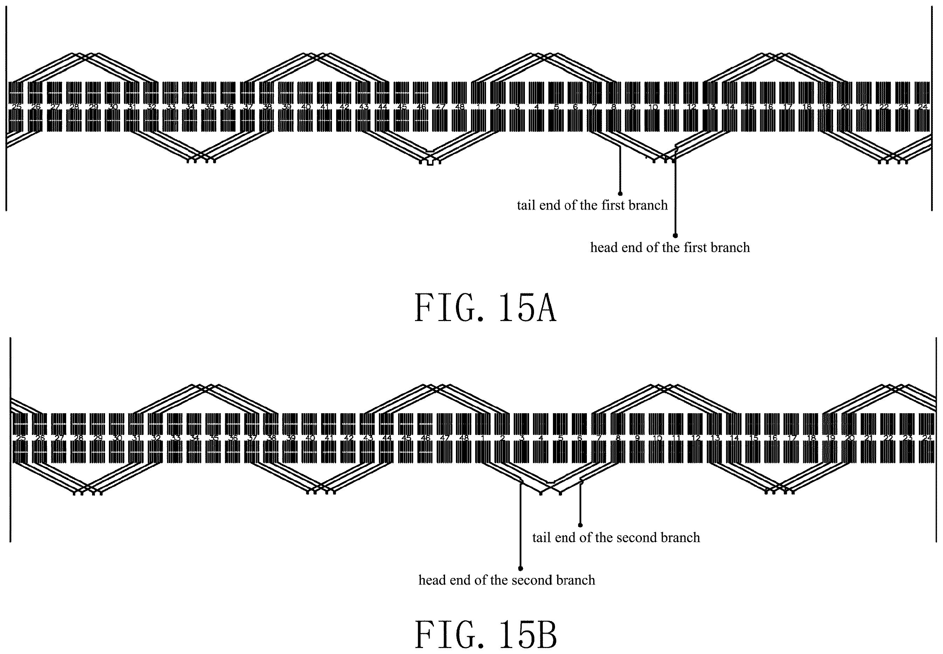

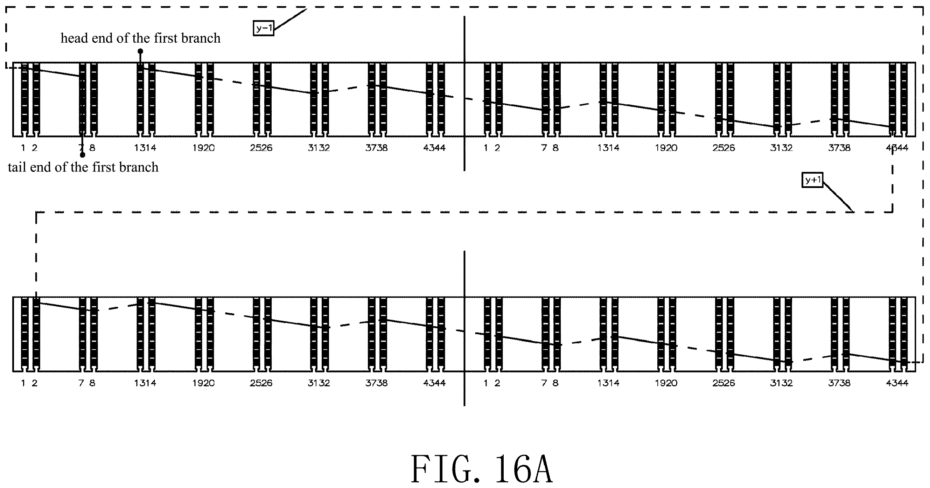

As shown in Fig. 15A and Fig. 16A, the first parallel-winding branch of phase U is connected as:
13.1^19.2-25.3^31.4-37.3^43.4-1.5^7.6-13.5^19.6-25.7^31.8-37.7^43.8↔2.1^8.2-1 4.1^20.2-26.3^32.4-38.3^44.4-2.5^8.6-14.5^20.6-26.7^32.8-38.7^44.8↔1.1^7.2 (Note: "^" represents connected with connecting part, "-" represents connected by soldering, "↔" represents connected with deflector);

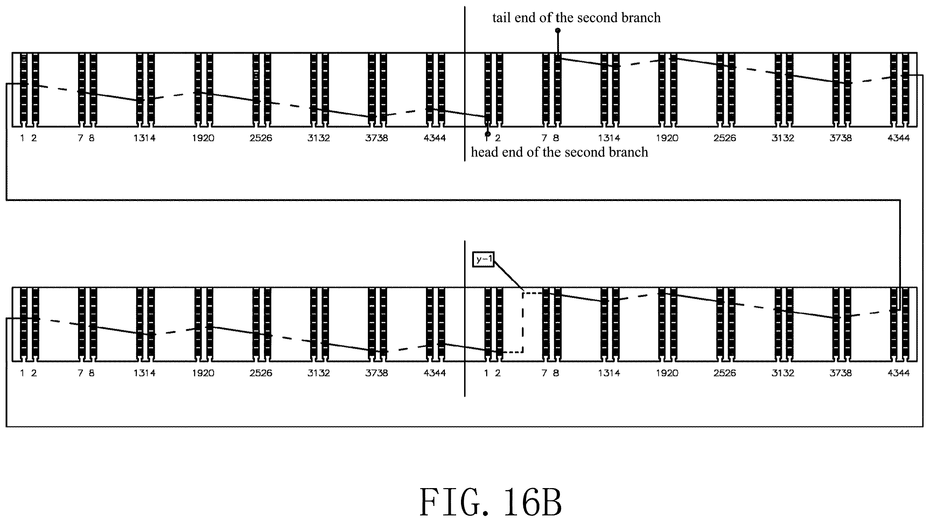

As shown in Fig. 15B and Fig. 16B, the second parallel-winding branch of Phase U is connected as:
1.8^43.7-37.8^31.7-25.6^19.5-13.6^7.5-1.4^43.3-37.4^31.3-25.2^19.1-13.2^7.1↔2. 8^44.7-38.8^32.7-26.6^20.5-14.6^8.5-2.4^44.3-38.4^32.3-26.2^20.1-14.2^8.1 (Note: "^" represents connected with connecting part, "-" represents connected by soldering, "↔" means by deflector connection);

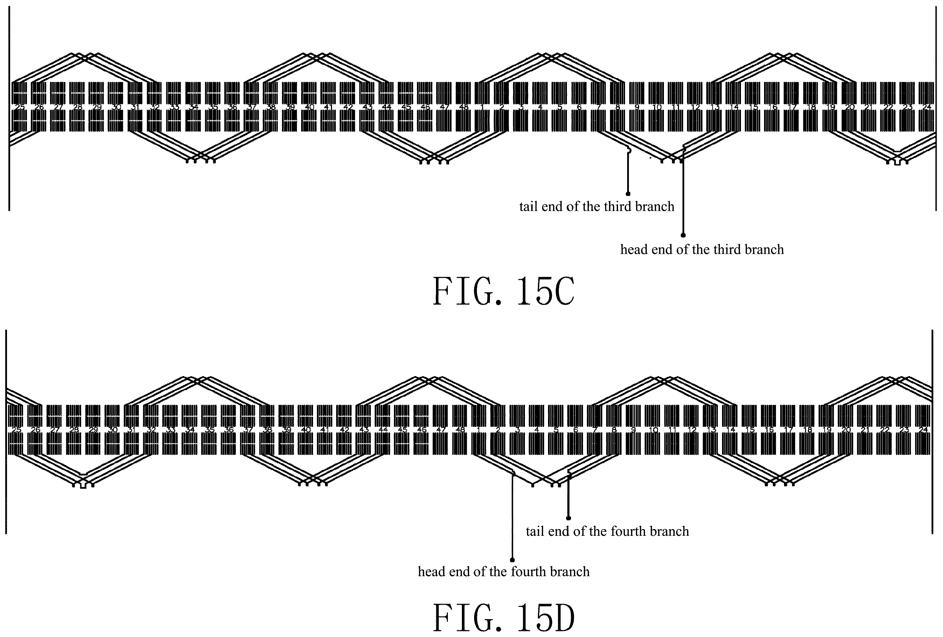

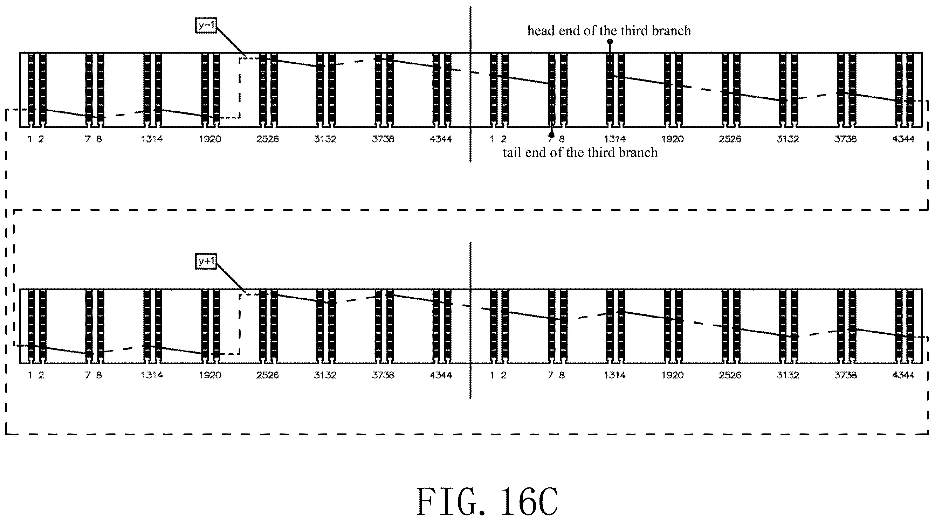

As shown in Fig. 15C and Fig. 16C, the third parallel-winding branch of phase U is connected as:
13.3^19.4-25.5^31.6-37.5^43.6-1.7^7.8-13.7^19.8↔26.1^32.2-38.1^44.2-2.3^8.4-1 4.3^20.4-26.5^32.6-38.5^44.6-2.7^8.8-14.7^20.8↔25.1^31.2-37.1^43.2-1.3^7.4 (Note: "^" represents connected with connecting part, "-" represents connected by soldering, "↔" represents connected with deflector);

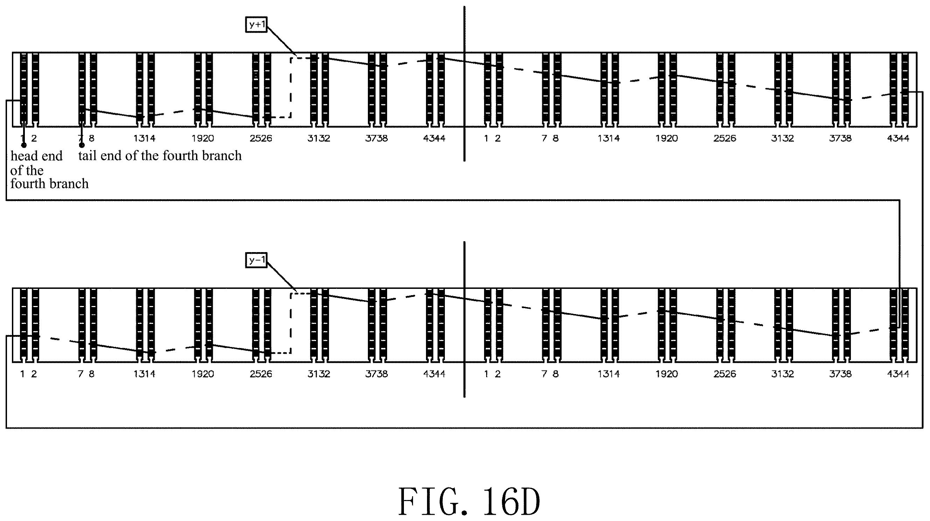

As shown in Fig. 15D and Fig. 16D, the fourth parallel-winding branch of phase U is connected as:
1.6^43.5-37.6^31.5-25.4^19.3-13.4^7.3-1.2^43.1-37.2^31.1↔26.8^20.7-14.8^8.7-2. 6^44.5-38.6^32.5-26.4^20.3-14.4^8.3-2.2^44.1-38.2^32.1↔25.8^19.7-13.8^7.7 (Note: "^" represents connected by means of connecting parts, "-" represents connected by soldering, "↔" represents connected by defector connection).

The winding structure of Phase V and Phase W can be obtained according to the above patterns, and thus not repeated here.

### Example III

In this example of a three-phase AC motor, a stator includes a stator core 11 and a stator winding structure 100. The stator core 11 has a plurality of slots distributed circumferentially. The stator winding structure 100 consists of a plurality of U-shaped flat copper wires 10.

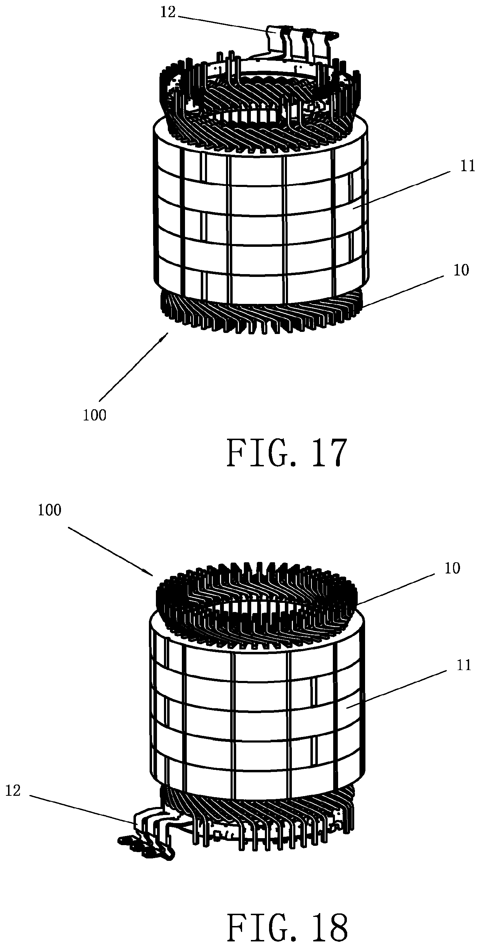

The outlet wires of the three phases (U, V and W phases) of the stator are at the soldered ends of the U-shaped flat copper wires 10 of the stator winding structure 100. Accordingly, a deflector 12 (shown in Figs. 7A-7D) is also arranged at the solder end for the outlet wires of each phase. The stator of Example III is shown in Figs. 17-18.

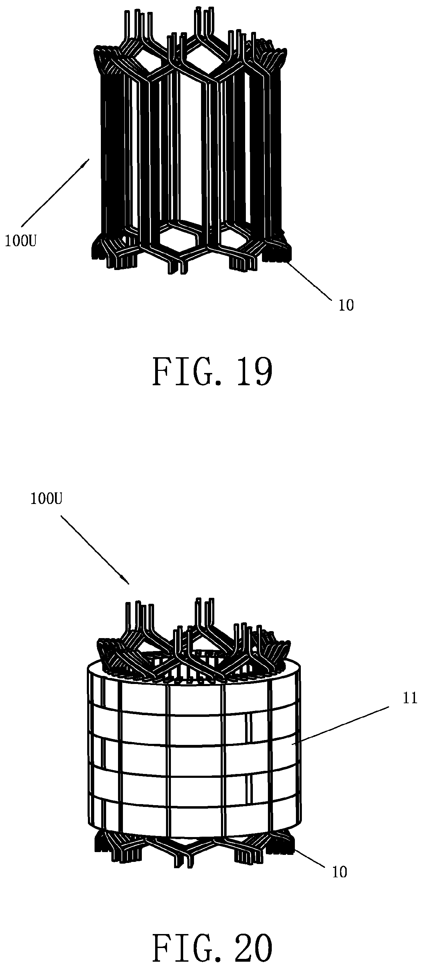

A perspective view, a wiring structure and an expansion diagram from the U-shaped end (first side) of the four parallel-winding branches of the U-phase winding structure 100U of Example III are shown in Figs. 19-20, Figs. 21A-21D and Figs. 22A-22D, respectively.

Each phase includes four parallel-winding branches: a first parallel-winding branch, a second parallel-winding branch, a third parallel-winding branch and a fourth parallel-winding branch, respectively.

The first parallel-winding branch of the winding structure of phase U is connected in the following way partially shown as:
conductor of layer 1 in slot 8 being connected to conductor of layer 2 in slot 14 at the solder end by soldering with pitch y;
conductor of layer 2 in slot 14 being connected to conductor of layer 1 in slot 20 at the U-shaped end by connecting part;
conductor of layer 1 in slot 20 being connected to conductor of layer 2 in slot 26 at the solder end by soldering with pitch y;
conductor of layer 2 in slot 26 being connected to conductor of layer 3 in slot 32 at the U-shaped end by connecting part;
conductor of layer 3 in slot 32 being connected to conductor of layer 4 in slot 38 at the solder end by soldering with pitch y.

Based on the above, the complete connection of Example III can be seen as follows.

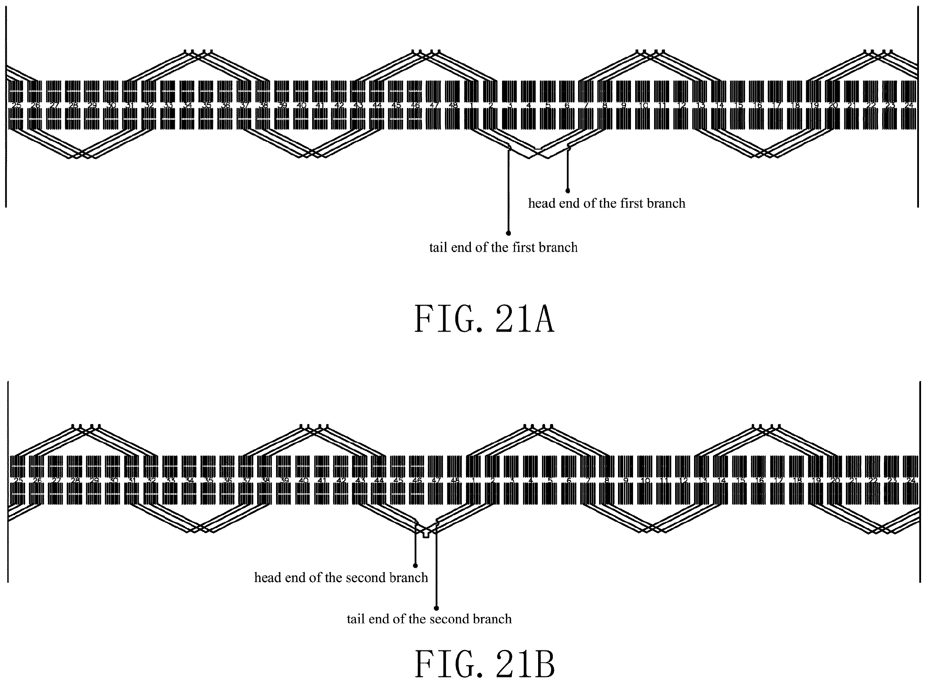

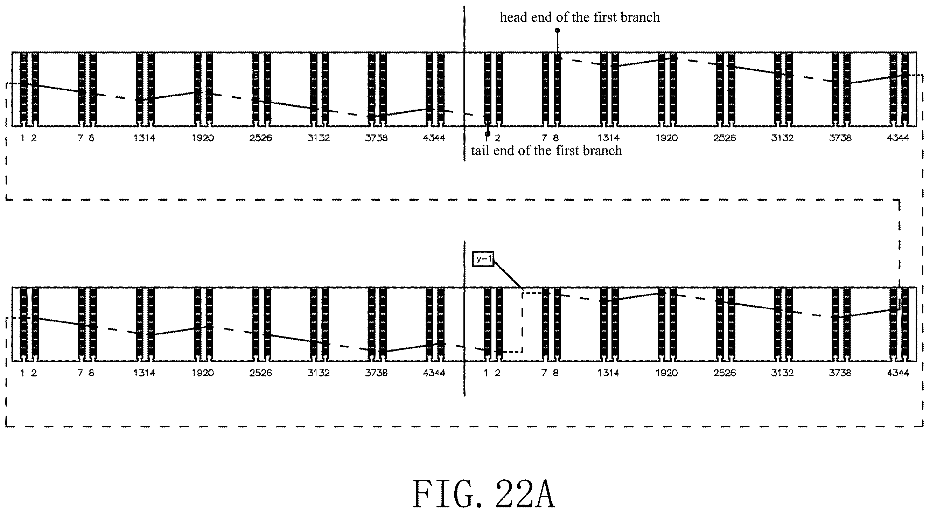

As shown in Fig. 21A and Fig. 22A, the first parallel-winding branch of phase U is connected as:
8.1-14.2^20.1-26.2^32.3-38.4^44.3-2.4^8.5-14.6^20.5-26.6^32.7-38.8^44.7-2.8↔7. 1-13.2^19.1-25.2^31.3-37.4^43.3-1.4^7.5-13.6^19.5-25.6^31.7-37.8^43.7-1.8 (Note: "^" represents connected with connecting part, "-" represents connected by soldering, "↔" represents connected with deflector);

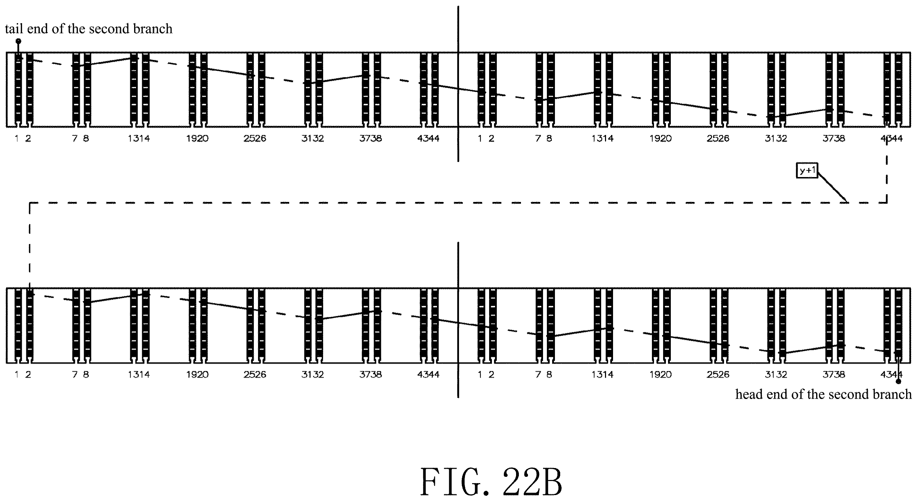

As shown in Fig. 21B and Fig. 22B, the second parallel-winding branch of Phase U is connected as:
44.8-38.7^32.8-26.7^20.6-14.5^8.6-2.5^44.4-38.3^32.4-26.3^20.2-14.1^8.2-2.1↔43 .8-37.7^31.8-25.7^19.6-13.5^7.6-1.5^43.4-37.3^31.4-25.3^19.2-13.1^7.2-1.1 (Note: "^" represents connected with connecting part, "-" represents connected by soldering, "↔" represents connected with deflector);

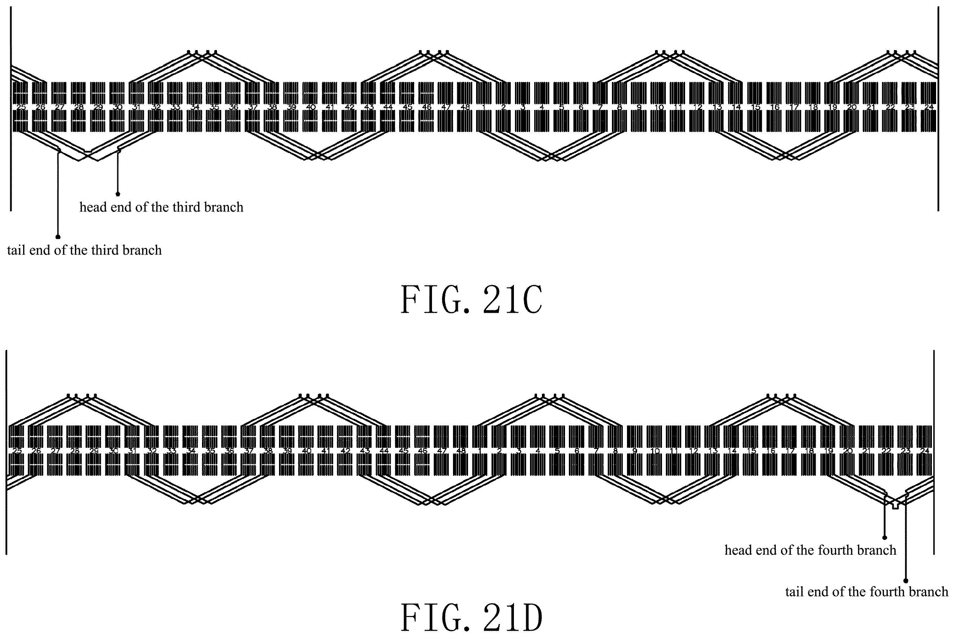

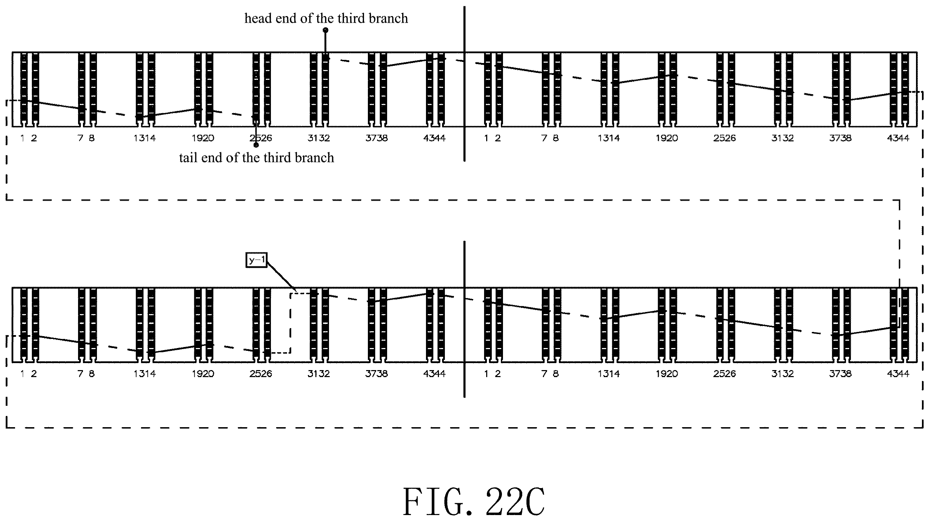

As shown in Fig. 21C and Fig. 22C, the third parallel-winding branch of phase U is connected as:
32.1-38.2^44.1-2.2^8.3-14.4^20.3-26.4^32.5-38.6^44.5-2.6^8.7-14.8^20.7-26.8↔31 .1-37.2^43.1-1.2^7.3-13.4^19.3-25.4^31.5-37.6^43.5-1.6^7.7-13.8^19.7-25.8 (Note: "^" represents connected with connecting part, "-" represents connected by soldering, "↔" represents connected with deflector);

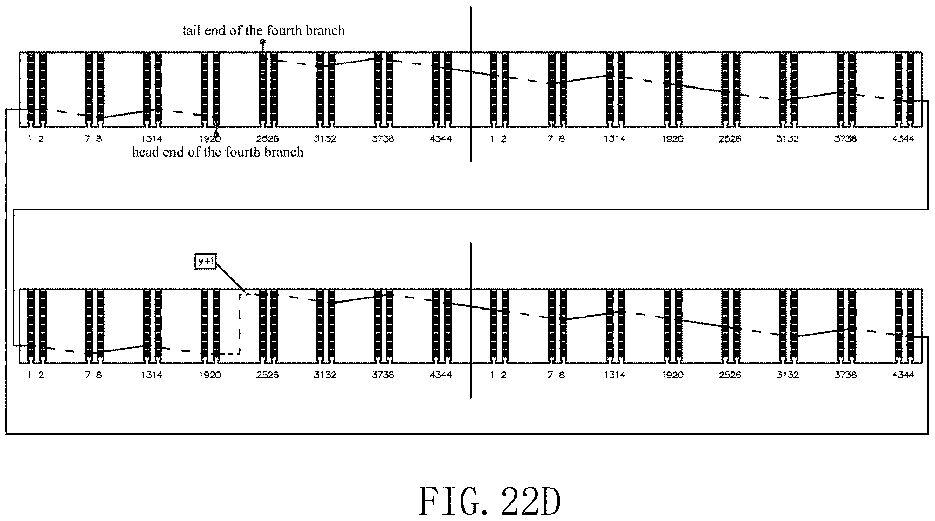

As shown in Fig. 21D and Fig. 22D, the fourth parallel-winding branch of phase U is connected as:
20.8-14.7^8.8-2.7^44.6-38.5^32.6-26.5^20.4-14.3^8.4-2.3^44.2-38.1^32.2-26.1↔19 .8-13.7^7.8-1.7^43.6-37.5^31.6-25.5^19.4-13.3^7.4-1.3^43.2-37.1^31.2-25.1 (Note: "^" represents connected with connecting part, "-" represents connected by soldering, "↔" represents connected with deflector).

The winding structure of Phase V and Phase W can be obtained according to the above patterns, and thus not repeated here.

It is to be understood that although this application is based on an example of Y-type winding structure, the features claimed to be protected by this application can also be applied to delta-type winding structure.

It will be understood that although the present application is exemplified by a full pitch winding structure, the features claimed to be protected by the present application can also be applied to a short pitch winding structure and a long pitch winding structure.

Although the present application is described herein with reference to specific embodiments, the scope of the present application is not limited to the details shown. Various modifications may be made to these details without departing from the scope of the invention as defined by the claims.

## Claims

1. A stator winding structure (100) for a motor, the motor being a three-phase AC motor having eight poles, comprising phases U, V and W; wherein each phase comprises four parallel-winding branches: a first parallel-winding branch, a second parallel-winding branch, a third parallel-winding branch and a fourth parallel-winding branch, each parallel-winding branch having a head end and a tail end, the winding directions of the first and third parallel-winding branches being the same, and the winding directions of the second and fourth parallel-winding branches being the same and opposite to the winding directions of the first and third parallel-winding branches, the three-phase AC motor being capable of normal operation when being energized,
the stator winding structure (100) being arranged on the stator core (11), the stator core (11) comprising a plurality of slots, the stator winding comprising a plurality of U-shaped flat copper wires (10), wherein each U-shaped flat copper wire comprises: a first conductor, a second conductor substantially parallel to the first conductor, and a connecting part connecting the first conductor and the second conductor; wherein the connecting part of each U-shaped flat copper wire arranged in the motor is located on the same side relative to the motor,
wherein Q represents the number of slots of the stator core (11), the slots being numbered clockwise or counterclockwise; i represents a natural number satisfying 1 ≤ i ≤ Q; q represents the number of slots per pole per phase and p represents the number of poles and p = 8; q = (Q/p)/3 and q = 1, 2, 3...and so on; L represents the number of layers of each slot and the layers are numbered in the radial direction of the stator core (11) consecutively and the innermost layer j=1 and the outermost layer j=L, and where L is an even number and L = 8 + 4*I, where I = 0, 1, 2, 3 ..., and j is a natural number satisfying 1 ≤ j ≤ L, and y represents the pitch of the U-shaped flat copper wire; one layer in one slot corresponding to one conductor; and
wherein as seen from the side of the connecting part, two conductors of the U-shaped flat copper wire are connected as:
- conductor of layer j in slot i being connected to conductor of layer j+1 in slot i+y in the case that j is odd and j=1, 3, 5... L-1,
- conductor of layer j in slot i being connected to conductor of layer j-1 in slot i-y in the case that j is even and j = 2, 4, 6...L,
as seen from the solder end of the motor, two conductors being soldered or joined with deflector (12) to form a three-phase AC motor are connected as:
- conductor of layer j in slot i being connected to conductor of layer j+1 or j-1 in slot i+y in the case that j=2, 4, 6...L-2;
- conductor of layer j in slot i being connected to conductor of layer j+1 or j-1 in slot i-y in the case that j=3, 5...L-1;
- conductor of layer j in slot i being connected to conductor of layer j-1 in slot i+y or to layer 1 in slot i+y+1 or i+y-1 in the case that j=L,
- conductor of layer j in slot i being connected to conductor of layer j+1 in slot i-y or to layer L in slot i-y+1 or i-y-1 in the case that j =1,
where the value of i depends on the phase of the winding and the branch number, and where i-y = i-y+Q when i-y < 0 and i+y = i+y-Q when i+y > Q.

2. A stator winding structure (100) for a motor, the motor being a three-phase AC motor having eight poles, comprising phases U, V and W; wherein each phase comprises four parallel-winding branches: a first parallel-winding branch, a second parallel-winding branch, a third parallel-winding branch and a fourth parallel-winding branch, each parallel-winding branch having a head end and a tail end, the winding directions of the first and third parallel-winding branches being the same, and the winding directions of the second and fourth parallel-winding branches being the same and both opposite to the winding directions of the first and third parallel-winding branches, the three-phase AC motor being capable of normal operation when being energized,
the stator winding structure (100) being arranged on the stator core (11), the stator core (11) comprising a plurality of slots, the stator winding comprising a plurality of U-shaped flat copper wires (10), wherein each U-shaped flat copper wire comprises: a first conductor, a second conductor substantially parallel to the first conductor, and a connecting part connecting the first conductor and the second conductor; wherein the connecting part of each U-shaped flat copper wire arranged in the motor is located on the same side relative to the motor,
wherein Q represents the number of slots of the stator core (11), the slots being numbered clockwise or counterclockwise; i represents a natural number satisfying 1 ≤ i ≤ Q; q represents the number of slots per pole per phase and p represents the number of poles and p = 8; q = (Q/p)/3 and q = 1, 2, 3...and so on; L represents the number of layers of each slot and the layers are numbered in the radial direction of the stator core (11) consecutively and the innermost layer j=1 and the outermost layer j=L, where L is an even number and L = 8 + 4*I, where I = 0, 1, 2, 3 ..., j is a natural number satisfying 1 ≤ j ≤ L; and y represents the pitch of the U-shaped flat copper wire; one layer in one slot corresponding to one conductor,
as seen from the side of the solder end, two conductors being soldered together to form a three-phase AC motor with 8 poles and including four parallel-winding branches per phase are connected as:
- conductor of layer j in slot i being connected to conductor of layer j+1 in slot i+y in the case that j is odd and j=1, 3, 5... L-1,
- conductor of layer j in slot i being connected to conductor of layer j-1 in slot i-y in the case that j is even and j=2, 4, 6...L,
as seen from the side of the motor with the connecting part, two conductors are connected with deflector (12) or connecting part as:
- conductor of layer j in slot i being connected to conductor of layer j+1 or j-1 in slot i+y in the case that j=2, 4, 6...L-2,
- conductor of layer j in slot i being connected to conductor of layer j+1 or j-1 in slot i-y in the case that j=3, 5...L-1,
- conductor of layer j in slot i being connected to conductor of layer j-1 in slot i+y or to conductor of layer 1 in slot i+y+1 or i+y-1 in the case that j=L,
- conductor of layer j in slot i being connected to conductor of layer j+1 in slot i-y or to layer L in slot i-y+1 or i-y-1 in the case that j =1,
where the value of i depends on the phase of the winding and the branch number and where i-y = i-y+Q when i-y < 0 and i+y = i+y-Q when i+y > Q.

3. The stator winding structure (100) according to claim 1 or 2, wherein each of the conductors of the first parallel-winding branch and the third parallel-winding branch at head ends is located in an odd layer of slot i±2ky, respectively, where k=0, 1, 2, 3...and so on;
and wherein each of the conductors of the second parallel-winding branch and the fourth parallel-winding branch at head ends is located in an even layer of stator i±2ky , where k=0, 1, 2, 3...and so on.

4. The stator winding structure (100) according to claim 1 or 2, wherein the head and tail ends of the first parallel-winding branch, the second parallel-winding branch, the third parallel-winding branch and the fourth parallel-winding branch are located in layer 1 or layer L.

5. The stator winding structure (100) according to claim 1 or 2, wherein the head ends of two of the four parallel-winding branches are located in layer 1 and layer L of slot i respectively; and the head ends of the other two of the four parallel-winding branches are located in layer 1 and layer L of slot i+Q/2, respectively.

6. The stator winding structure (100) according to claim 1 or 2, wherein the stator winding structure (100) is configured as a Y-type winding structure connected in a tail-to-tail manner or a delta-type winding structure connected in a head-to-tail manner.

7. The stator winding structure (100) according to claim 1 or 2, wherein the stator winding structure (100) is a full pitch winding structure, a short pitch winding structure or a long pitch winding structure.

8. A motor comprising a stator winding structure (100) according to any one of claims 1-7.

9. The motor according to claim 8, wherein the motor includes 48 stator slots, each stator slot having 8 layers.

10. The motor according to claim 9, wherein phase U comprises four parallel-winding branches: a first parallel-winding branch of phase U, a second parallel-winding branch of phase U, a third parallel-winding branch of phase U and a fourth parallel-winding branch of phase U; "^" representing connection with connecting part of a U-shaped flat copper wire, "- " representing connection by soldering, "↔" representing connection by deflector (12), and "i.j" denoting layer j in slot i; and wherein
the first parallel-winding branch of phase U is connected as:
1.1^7.2-13.1^19.2-25.3^31.4-37.3^43.4-1.5^7.6-13.5^19.6-25.7^31.8-37.7^43.8↔2. 1^8.2-14.1^20.2-26.3^32.4-38.3^44.4-2.5^8.6-14.5^20.6-26.7^32.8-38.7^44.8;
the second parallel-winding branch of phase U is connected as:
1.8^43.7-37.8^31.7-25.6^19.5-13.6^7.5-1.4^43.3-37.4^31.3-25.2^19.1-13.2^7.1↔2. 8^44.7-38.8^32.7-26.6^20.5-14.6^8.5-2.4^44.3-38.4^32.3-26.2^20.1-14.2^8.1;
the third parallel-winding branch of phase U is connected as:
25.1^31.2-37.1^43.2-1.3^7.4-13.3^19.4-25.5^31.6-37.5^43.6-1.7^7.8-13.7^19.8↔2 6.1^32.2-38.1^44.2-2.3^8.4-14.3^20.4-26.5^32.6-38.5^44.6-2.7^8.8-14.7^20.8;
the fourth parallel-winding branch of phase U is connected as:
25.8^19.7-13.8^7.7-1.6^43.5-37.6^31.5-25.4^19.3-13.4^7.3-1.2^43.1-37.2^31.1↔2 6.8^20.7-14.8^8.7-2.6^44.5-38.6^32.5-26.4^20.3-14.4^8.3-2.2^44.1-38.2^32.1.

11. The motor according to claim 9, wherein phase U comprises four parallel-winding branches: a first parallel-winding branch of phase U , a second parallel-winding branch of phase U, a third parallel-winding branch of phase U and a fourth parallel-winding branch of phase U; "^" representing connection with connecting part of a U-shaped flat copper wire, "-" representing connection by soldering, "↔" representing connection by deflector (12), and "i.j" denoting layer j in slot i; and wherein
the first parallel-winding branch of phase U is connected as:
13.1^19.2-25.3^31.4-37.3^43.4-1.5^7.6-13.5^19.6-25.7^31.8-37.7^43.8↔2.1^8.2-1 4.1^20.2-26.3^32.4-38.3^44.4-2.5^8.6-14.5^20.6-26.7^32.8-38.7^44.8↔1.1^7.2;
the second parallel-winding branch of phase U is connected as:
1.8^43.7-37.8^31.7-25.6^19.5-13.6^7.5-1.4^43.3-37.4^31.3-25.2^19.1-13.2^7.1↔2. 8^44.7-38.8^32.7-26.6^20.5-14.6^8.5-2.4^44.3-38.4^32.3-26.2^20.1-14.2^8.1;
the third parallel-winding branch of phase U is connected as:
13.3^19.4-25.5^31.6-37.5^43.6-1.7^7.8-13.7^19.8↔26.1^32.2-38.1^44.2-2.3^8.4-1 4.3^20.4-26.5^32.6-38.5^44.6-2.7^8.8-14.7^20.8↔25.1^31.2-37.1^43.2-1.3^7.4;
the fourth parallel-winding branch of phase U is connected as:
1.6^43.5-37.6^31.5-25.4^19.3-13.4^7.3-1.2^43.1-37.2^31.1↔26.8^20.7-14.8^8.7-2. 6^44.5-38.6^32.5-26.4^20.3-14.4^8.3-2.2^44.1-38.2^32.1↔25.8^19.7-13.8^7.7.

12. The motor according to claim 9, wherein phase U comprises four parallel-winding branches: a first parallel-winding branch of U phase , a second parallel-winding branch of phase U, a third parallel-winding branch of phase U and a fourth parallel-winding branch of phase U; "^" representing connection with connecting part of a U-shaped flat copper wire, "-" representing connection by soldering, "↔" representing connection by deflector (12), and "i.j" denoting layer j in slot i; and wherein
the first parallel-winding branch of phase U is connected as:
8.1-14.2^20.1-26.2^32.3-38.4^44.3-2.4^8.5-14.6^20.5-26.6^32.7-38.8^44.7-2.8↔7. 1-13.2^19.1-25.2^31.3-37.4^43.3-1.4^7.5-13.6^19.5-25.6^31.7-37.8^43.7-1.8;
the second parallel-winding branch of phase U is connected as:
44.8-38.7^32.8-26.7^20.6-14.5^8.6-2.5^44.4-38.3^32.4-26.3^20.2-14.1^8.2-2.1↔43 .8-37.7^31.8-25.7^19.6-13.5^7.6-1.5^43.4-37.3^31.4-25.3^19.2-13.1^7.2-1.1;
the third parallel-winding branch of phase U is connected as:
32.1-38.2^44.1-2.2^8.3-14.4^20.3-26.4^32.5-38.6^44.5-2.6^8.7-14.8^20.7-26.8↔31 .1-37.2^43.1-1.2^7.3-13.4^19.3-25.4^31.5-37.6^43.5-1.6^7.7-13.8^19.7-25.8;
the fourth parallel-winding branch of phase U is connected as:
20.8-14.7^8.8-2.7^44.6-38.5^32.6-26.5^20.4-14.3^8.4-2.3^44.2-38.1^32.2-26.1↔19 .8-13.7^7.8-1.7^43.6-37.5^31.6-25.5^19.4-13.3^7.4-1.3^43.2-37.1^31.2-25.1.

13. A vehicle comprising a motor according to any one of claims 8-12.

## Patentansprüche

1. Statorwicklungsstruktur (100) für einen Motor, wobei der Motor ein Dreiphasen-AC-Motor mit acht Polen ist, der die Phasen U, V und W umfasst; wobei jede Phase vier Parallelwicklungszweige umfasst: einen ersten Parallelwicklungszweig, einen zweiten Parallelwicklungszweig, einen dritten Parallelwicklungszweig und einen vierten Parallelwicklungszweig, wobei jeder Parallelwicklungszweig ein Kopfende und ein Schwanzende aufweist, die Wicklungsrichtungen des ersten und des dritten Parallelwicklungszweigs gleich sind und die Wicklungsrichtungen des zweiten und des vierten Parallelwicklungszweigs gleich und entgegengesetzt zu den Wicklungsrichtungen des ersten und des dritten Parallelwicklungszweigs sind, der Dreiphasen-AC-Motor zum Normalbetrieb in der Lage ist, wenn er mit Energie versorgt wird,
die Statorwicklungsstruktur (100) auf dem Statorkern (11) angeordnet ist, der Statorkern (11) eine Vielzahl von Nuten umfasst, die Statorwicklung eine Vielzahl von U-förmigen flachen Kupferdrähten (10) umfasst, wobei jeder U-förmige flache Kupferdraht Folgendes umfasst: einen ersten Leiter, einen zweiten Leiter, der im Wesentlichen parallel zu dem ersten Leiter ist, und ein Verbindungsteil, das den ersten Leiter und den zweiten Leiter verbindet; wobei das Verbindungsteil jedes U-förmigen flachen Kupferdrahts, der in dem Motor angeordnet ist, sich in Bezug auf den Motor auf der gleichen Seite befindet,
wobei Q die Anzahl von Nuten des Statorkerns (11) darstellt, wobei die Nuten im Uhrzeigersinn oder gegen den Uhrzeigersinn nummeriert sind; i eine natürliche Zahl darstellt, die 1 ≤ i ≤ Q erfüllt; q die Anzahl der Nuten pro Pol pro Phase darstellt und p die Anzahl der Pole darstellt und p = 8; q = (Q/p)/3 und q = 1, 2, 3...und so weiter; L die Anzahl der Schichten jeder Nut darstellt und die Schichten in der radialen Richtung des Statorkerns (11) fortlaufend nummeriert sind und die innerste Schicht j=1 und die äußerste Schicht j=L, und wobei L eine gerade Zahl ist und L = 8 + 4*l, wobei l = 0, 1, 2, 3 ..., und j eine natürliche Zahl ist, die 1 ≤ j ≤ L erfüllt, und y den Schritt des U-förmigen flachen Kupferdrahts darstellt; eine Schicht in einer Nut einem Leiter entspricht; und
wobei, von der Seite des Verbindungsteils gesehen, zwei Leiter des U-förmigen flachen Kupferdrahts wie folgt verbunden sind:
- Leiter der Schicht j in Nut i verbunden mit Leiter der Schicht j+1 in Nut i+y, falls j ungerade ist und j=1, 3, 5...L-1,
- Leiter der Schicht j in Nut i verbunden mit Leiter der Schicht j-1 in Nut i-y, falls j gerade ist und j = 2, 4, 6...L,
wobei, vom Lötende des Motors aus gesehen, zwei Leiter, die mit dem Deflektor (12) verlötet oder zusammengefügt sind, um einen Dreiphasen-AC-Motor zu bilden, wie folgt verbunden sind:
- Leiter der Schicht j in Nut i verbunden mit Leiter der Schicht j+1 oder j-1 in Nut i+y, falls j=2, 4, 6...L-2;
- Leiter der Schicht j in Nut i verbunden mit Leiter der Schicht j+1 oder j-1 in Nut i-y, falls j=3, 5...L-1;
- Leiter der Schicht j in Nut i verbunden mit Leiter der Schicht j-1 in Nut i+y oder mit Schicht 1 in Nut i+y+1 oder i+y-1, falls j=L,
- Leiter der Schicht j in Nut i verbunden mit Leiter der Schicht j+1 in Nut i-y oder mit Schicht L in Nut i-y+1 oder i-y-1, falls j =1,
wobei der Wert von i von der Phase der Wicklung und der Zweignummer abhängt, und wobei i-y = i-y+Q, wenn i-y < 0 und i+y = i+y-Q, wenn i+y > Q.

2. Statorwicklungsstruktur (100) für einen Motor, wobei der Motor ein Dreiphasen-AC-Motor mit acht Polen ist, der die Phasen U, V und W umfasst; wobei jede Phase vier Parallelwicklungszweige umfasst: einen ersten Parallelwicklungszweig, einen zweiten Parallelwicklungszweig, einen dritten Parallelwicklungszweig und einen vierten Parallelwicklungszweig, wobei jeder Parallelwicklungszweig ein Kopfende und ein Schwanzende aufweist, die Wicklungsrichtungen des ersten und des dritten Parallelwicklungszweigs gleich sind und die Wicklungsrichtungen des zweiten und des vierten Parallelwicklungszweigs gleich und beide entgegengesetzt zu den Wicklungsrichtungen des ersten und des dritten Parallelwicklungszweigs sind, der Dreiphasen-AC-Motor zum Normalbetrieb in der Lage ist, wenn er mit Energie versorgt wird,
die Statorwicklungsstruktur (100) auf dem Statorkern (11) angeordnet ist, der Statorkern (11) eine Vielzahl von Nuten umfasst, die Statorwicklung eine Vielzahl von U-förmigen flachen Kupferdrähten (10) umfasst, wobei jeder U-förmige flache Kupferdraht Folgendes umfasst: einen ersten Leiter, einen zweiten Leiter, der im Wesentlichen parallel zu dem ersten Leiter ist, und ein Verbindungsteil, das den ersten Leiter und den zweiten Leiter verbindet; wobei das Verbindungsteil jedes U-förmigen flachen Kupferdrahts, der in dem Motor angeordnet ist, sich in Bezug auf den Motor auf der gleichen Seite befindet,
wobei Q die Anzahl von Nuten des Statorkerns (11) darstellt, wobei die Nuten im Uhrzeigersinn oder gegen den Uhrzeigersinn nummeriert sind; i eine natürliche Zahl darstellt, die 1 ≤ i ≤ Q erfüllt; q die Anzahl der Nuten pro Pol pro Phase darstellt und p die Anzahl der Pole darstellt und p = 8 ist; q = (Q/p)/3 und q = 1, 2, 3...und so weiter; L die Anzahl der Schichten jeder Nut darstellt und die Schichten in der radialen Richtung des Statorkerns (11) fortlaufend nummeriert sind und die innerste Schicht j=1 und die äußerste Schicht j=L, wobei L eine gerade Zahl ist und L = 8 + 4*l, wobei l = 0, 1, 2, 3 ..., j eine natürliche Zahl ist, die 1 ≤ j ≤ L erfüllt, und y den Schritt des U-förmigen flachen Kupferdrahts darstellt; eine Schicht in einer Nut einem Leiter entspricht;
wobei, von der Seite des Lötendes gesehen, zwei Leiter, die zusammengelötet sind, um einen Dreiphasen-AC-Motor mit 8 Polen auszubilden, und vier Parallelwicklungszweige pro Phase enthalten, wie folgt verbunden sind:
- Leiter der Schicht j in Nut i verbunden mit Leiter der Schicht j+1 in Nut i+y, falls j ungerade ist und j=1, 3, 5...L-1,
- Leiter der Schicht j in Nut i verbunden mit Leiter der Schicht j-1 in Nut i-y, falls j gerade ist und j=2, 4, 6...L,
wobei, von der Seite des Motors mit dem Verbindungsteil gesehen, zwei Leiter mit dem Deflektor (12) oder dem Verbindungsteil wie folgt verbunden sind:
- Leiter der Schicht j in Nut i verbunden mit Leiter der Schicht j+1 oder j-1 in Nut i+y, falls j=2, 4, 6...L-2,
- Leiter der Schicht j in Nut i verbunden mit Leiter der Schicht j+1 oder j-1 in Nut i-y, falls j=3, 5...L-1,
- Leiter der Schicht j in Nut i verbunden mit Leiter der Schicht j-1 in Nut i+y oder mit Leiter der Schicht 1 in Nut i+y+1 oder i+y-1, falls j=L,
- Leiter der Schicht j in Nut i verbunden mit Leiter der Schicht j+1 in Nut i-y oder mit Schicht L in Nut i-y+1 oder i-y-1, falls j =1,
wobei der Wert von i von der Phase der Wicklung und der Zweignummer abhängt, und wobei i-y = i-y+Q, wenn i-y < 0 und i+y = i+ y-Q, wenn i+y > Q.

3. Statorwicklungsstruktur (100) nach Anspruch 1 oder 2, wobei sich jeder der Leiter des ersten Parallelwicklungszweigs und des dritten Parallelwicklungszweigs an Kopfenden jeweils in einer ungeraden Schicht der Nut i±2ky befindet, wobei k=0, 1, 2, 3...und so weiter;
und wobei sich jeder der Leiter des zweiten Parallelwicklungszweigs und des vierten Parallelwicklungszweigs an Kopfenden in einer geraden Schicht des Stators i±2ky befindet, wobei k=0, 1, 2, 3...und so weiter.

4. Statorwicklungsstruktur (100) nach Anspruch 1 oder 2, wobei das Kopf- und das Schwanzende des ersten Parallelwicklungszweigs, des zweiten Parallelwicklungszweigs, des dritten Parallelwicklungszweigs und des vierten Parallelwicklungszweigs sich in Schicht 1 oder Schicht L befinden.

5. Statorwicklungsstruktur (100) nach Anspruch 1 oder 2, wobei sich die Kopfenden von zwei der vier Parallelwicklungszweige jeweils in Schicht 1 und Schicht L der Nut i befinden; und sich die Kopfenden der anderen zwei der vier Parallelwicklungszweige jeweils in Schicht 1 und Schicht L der Nut i+Q/2 befinden.

6. Statorwicklungsstruktur (100) nach Anspruch 1 oder 2, wobei die Statorwicklungsstruktur (100) als eine Y-Typ-Wicklungsstruktur, die in einer Schwanz-an-Schwanz-Weise verbunden ist, oder eine Delta-Typ-Wicklungsstruktur, die in einer Kopf-an-Schwanz-Weise verbunden ist, konfiguriert ist.

7. Statorwicklungsstruktur (100) nach Anspruch 1 oder 2, wobei die Statorwicklungsstruktur (100) eine Wicklungsstruktur mit vollem Schritt, eine Wicklungsstruktur mit verkürztem Schritt oder eine Wicklungsstruktur mit verlängertem Schritt ist.

8. Motor, umfassend eine Statorwicklungsstruktur (100) nach einem der Ansprüche 1 - 7.

9. Motor nach Anspruch 8, wobei der Motor 48 Statornuten enthält, wobei jede Statornut 8 Schichten aufweist.

10. Motor nach Anspruch 9, wobei die Phase U vier Parallelwicklungszweige umfasst: einen ersten Parallelwicklungszweig der Phase U, einen zweiten Parallelwicklungszweig der Phase U, einen dritten Parallelwicklungszweig der Phase U und einen vierten Parallelwicklungszweig der Phase U; "^" die Verbindung mit dem Verbindungsteil eines U-förmigen flachen Kupferdrahts darstellt, "- " die Verbindung durch Löten darstellt, "↔" die Verbindung durch Deflektor (12) darstellt und "i.j" Schicht j in Schlitz i bezeichnet; und wobei
der erste Parallelwicklungszweig der Phase U wie folgt verbunden ist:
1.1^{Λ}7.2-13.1^{Λ}19.2-25.3^{Λ}31.4-37.3^{Λ}43.4-1.5^{Λ}7.6-13.5^{Λ}19.6-25.7^{Λ}31.8-37.7^43.8↔2.1^{Λ}8.2-14.1^{Λ}20.2-26.3^{Λ}32.4-38.3^{Λ}44.4-2.5^{Λ}8.6-14.5^{Λ}20.6-26.7^{Λ}32.8-38.7^{Λ}44.8;
der zweite Parallelwicklungszweig der Phase U wie folgt verbunden ist:
1.8^{Λ}43.7-37.8^{Λ}31.7-25.6^{Λ}19.5-13.6^{Λ}7.5-1.4^{Λ}43.3-37.4^{Λ}31.3-25.2^{Λ}19.1-13.2^{Λ}7.1↔2.8^{Λ}44.7-38.8^{Λ}32.7-26.6^{Λ}20.5-14.6^{Λ}8.5-2.4^{Λ}44.3-38.4^{Λ}32.3-26.2^{Λ}20.1-14.2^{Λ}8.1;
der dritte Parallelwicklungszweig der Phase U wie folgt verbunden ist:
25.1^{Λ}31.2-37.1^{Λ}43.2-1.3^{Λ}7.4-13.3^{Λ}19.4-25.5^{Λ}31.6-37.5^{Λ}43.6-1.7^{Λ}7.8-13.7^{Λ}19.8↔26.1^{Λ}32.2-38.1^{Λ}44.2-2.3^{Λ}8.4-14.3^{Λ}20.4-26.5^{Λ}32.6-38.5^{Λ}44.6-2.7^{Λ}8.8-14.7^{Λ}20.8;
der vierte Parallelwicklungszweig der Phase U wie folgt verbunden ist:
25.8^{Λ}19.7-13.8^{Λ}7.7-1.6^{Λ}43.5-37.6^{Λ}31.5-25.4^{Λ}19.3-13.4^{Λ}7.3-1.2^{Λ}43.1-37.2^{Λ}31.1↔26.8^{Λ}20.7-14.8^{Λ}8.7-2.6^{Λ}44.5-38.6^{Λ}32.5-26.4^{Λ}20.3-14.4^{Λ}8.3-2.2^{Λ}44.1-38.2^{Λ}32.1.

11. Motor nach Anspruch 9, wobei die Phase U vier Parallelwicklungszweige umfasst: einen ersten Parallelwicklungszweig der Phase U, einen zweiten Parallelwicklungszweig der Phase U, einen dritten Parallelwicklungszweig der Phase U und einen vierten Parallelwicklungszweig der Phase U; "^" die Verbindung mit dem Verbindungsteil eines U-förmigen flachen Kupferdrahts darstellt, "-" die Verbindung durch Löten darstellt, "↔" die Verbindung durch Deflektor (12) darstellt und "i.j" Schicht j in Schlitz i bezeichnet; und wobei
der erste Parallelwicklungszweig der Phase U wie folgt verbunden ist:
13.1^{Λ}19.2-25.3^{Λ}31.4-37.3^{Λ}43.4-1.5^{Λ}7.6-13.5^{Λ}19.6-25.7^{Λ}31.8-37.7^{Λ}43.8↔2.1^{Λ}8.2-14.1^{Λ}20.2-26.3^{Λ}32.4-38.3^{Λ}44.4-2.5^{Λ}8.6-14.5^{Λ}20.6-26.7^{Λ}32.8-38.7^{Λ}44.8↔1.1^{Λ}7.2;
der zweite Parallelwicklungszweig der Phase U wie folgt verbunden ist:
1.8^{Λ}43.7-37.8^{Λ}31.7-25.6^{Λ}19.5-13.6^{Λ}7.5-1.4^{Λ}43.3-37.4^{Λ}31.3-25.2^{Λ}19.1-13.2^{Λ}7.1↔2.8^{Λ}44.7-38.8^{Λ}32.7-26.6^{Λ}20.5-14.6^{Λ}8.5-2.4^{Λ}44.3-38.4^{Λ}32.3-26.2^{Λ}20.1-14.2^{Λ}8.1;
der dritte Parallelwicklungszweig der Phase U wie folgt verbunden ist:
13.3^{Λ}19.4-25.5^{Λ}31.6-37.5^{Λ}43.6-1.7^{Λ}7.8-13.7^{Λ}19.8↔26.1^{Λ}32.2-38.1^{Λ}44.2-2.3^{Λ}8.4-14.3^{Λ}20.4-26.5^{Λ}32.6-38.5^{Λ}44.6-2.7^{Λ}8.8-14.7^20.8↔25.1^{Λ}31.2-37.1^{Λ}43.2-1.3^{Λ}7.4;
der vierte Parallelwicklungszweig der Phase U wie folgt verbunden ist:
1.6^{Λ}43.5-37.6^{Λ}31.5-25.4^{Λ}19.3-13.4^7.3-1.2^{Λ}43.1-37.2^{Λ}31.1↔26.8^20.7-14.8^{Λ}8.7-2.6^{Λ}44.5-38.6^{Λ}32.5-26.4^{Λ}20.3-14.4^{Λ}8.3-2.2^{Λ}44.1-38.2^{Λ}32.1↔25.8^19.7-13.8^{Λ}7.7.

12. Motor nach Anspruch 9, wobei die Phase U vier Parallelwicklungszweige umfasst: einen ersten Parallelwicklungszweig der U-Phase, einen zweiten Parallelwicklungszweig der Phase U, einen dritten Parallelwicklungszweig der Phase U und einen vierten Parallelwicklungszweig der Phase U; "^" die Verbindung mit dem Verbindungsteil eines U-förmigen flachen Kupferdrahts darstellt, "-" die Verbindung durch Löten darstellt, "↔" die Verbindung durch Deflektor (12) darstellt und "i.j" Schicht j in Schlitz i bezeichnet; und wobei
der erste Parallelwicklungszweig der Phase U wie folgt verbunden ist:
8.1-14.2^{Λ}20.1-26.2^{Λ}32.3-38.4^{Λ}44.3-2.4^{Λ}8.5-14.6^{Λ}20.5-26.6^{Λ}32.7-38.8^{Λ}44.7-2.8↔7.1-13.2^{Λ}19.1-25.2^{Λ}31.3-37.4^{Λ}43.3-1.4^{Λ}7.5-13.6^{Λ}19.5-25.6^{Λ}31.7-37.8^{Λ}43.7-1.8;
der zweite Parallelwicklungszweig der Phase U wie folgt verbunden ist:
44.8-38.7^{Λ}32.8-26.7^{Λ}20.6-14.5^{Λ}8.6-2.5^{Λ}44.4-38.3^{Λ}32.4-26.3^{Λ}20.2-14.1^{Λ}8.2-2.1↔43.8-37.7^{Λ}31.8-25.7^{Λ}19.6-13.5^{Λ}7.6-1.5^{Λ}43.4-37.3^{Λ}31.4-25.3^{Λ}19.2-13.1^{Λ}7.2-1.1;
der dritte Parallelwicklungszweig der Phase U wie folgt verbunden ist:
32.1-38.2^{Λ}44.1-2.2^{Λ}8.3-14.4^{Λ}20.3-26.4^{Λ}32.5-38.6^{Λ}44.5-2.6^{Λ}8.7-14.8^20.7-26.8↔31.1-37.2^{Λ}43.1-1.2^{Λ}7.3-13.4^{Λ}19.3-25.4^{Λ}31.5-37.6^{Λ}43.5-1.6^{Λ}7.7-13.8^{Λ}19.7-25.8;
der vierte Parallelwicklungszweig der Phase U wie folgt verbunden ist:
20.8-14.7^{Λ}8.8-2.7^{Λ}44.6-38.5^{Λ}32.6-26.5^{Λ}20.4-14.3^{Λ}8.4-2.3^{Λ}44.2-38.1^{Λ}32.2-26.1↔19.8-13.7^{Λ}7.8-1.7^{Λ}43.6-37.5^{Λ}31.6-25.5^{Λ}19.4-13.3^{Λ}7.4-1.3^{Λ}43.2-37.1^{Λ}31.2-25.1.

13. Fahrzeug, umfassend einen Motor nach einem der Ansprüche 8 - 12.

## Revendications

1. Structure d'enroulement de stator (100) pour un moteur, le moteur étant un moteur à CA triphasé présentant huit pôles, comprenant des phases U, V et W ; dans laquelle chaque phase comprend quatre branches à enroulement parallèle : une première branche à enroulement parallèle, une deuxième branche à enroulement parallèle, une troisième branche à enroulement parallèle et une quatrième branche à enroulement parallèle, chaque branche à enroulement parallèle présentant une extrémité de tête et une extrémité de queue, les directions d'enroulement des première et troisième branches à enroulement parallèle étant identiques, et les directions d'enroulement des deuxième et quatrième branches à enroulement parallèle étant identiques et opposées aux directions d'enroulement des première et troisième branches à enroulement parallèle, le moteur à CA triphasé étant capable de fonctionnement normal lorsqu'il est excité,
la structure d'enroulement de stator (100) étant agencée sur le noyau de stator (11), le noyau de stator (11) comprenant une pluralité d'encoches, l'enroulement de stator comprenant une pluralité de fils de cuivre plats en forme de U (10), dans lequel chaque fil de cuivre plat en forme de U comprend : un premier conducteur, un second conducteur sensiblement parallèle au premier conducteur, et une partie de connexion connectant le premier conducteur et le second conducteur ; dans lequel la partie de connexion de chaque fil de cuivre plat en forme de U agencé dans le moteur est située du même côté par rapport au moteur,
dans laquelle Q représente le nombre d'encoches du noyau de stator (11), les encoches étant numérotées dans le sens des aiguilles d'une montre ou dans le sens inverse des aiguilles d'une montre ; i représente un nombre naturel satisfaisant 1 ≤ i ≤ Q ; q représente le nombre d'encoches par pôle par phase et p représente le nombre de pôles et p = 8 ; q = (Q/p)/3 et q = 1, 2, 3... et ainsi de suite ; L représente le nombre de couches de chaque encoche et les couches sont numérotées dans la direction radiale du noyau de stator (11) consécutivement et la couche la plus à l'intérieur j=1 et la couche la plus à l'extérieur j=L, et où L est un nombre pair et L = 8 + 4*l, où l = 0, 1, 2, 3..., et j est un nombre naturel satisfaisant 1 ≤ j ≤ L, et y représente le pas du fil de cuivre plat en forme de U ; une couche dans une encoche correspondant à un conducteur ; et
dans laquelle, vu du côté de la partie de connexion, deux conducteurs du fil de cuivre plat en forme de U sont connectés ainsi :
- conducteur de la couche j dans l'encoche i étant connecté au conducteur de la couche j+1 dans l'encoche i+y dans le cas où j est impair et j=1, 3, 5...L-1,
- conducteur de la couche j dans l'encoche i étant connecté au conducteur de la couche j-1 dans l'encoche i-y dans le cas où j est pair et j=2, 4, 6...L,
vu de l'extrémité à souder du moteur, deux conducteurs étant soudés ou joints à un déflecteur (12) pour former un moteur CA triphasé sont connectés ainsi :
- conducteur de la couche j dans l'encoche i étant connecté au conducteur de la couche j+1 ou j-1 dans l'encoche i+y dans le cas où j=2, 4, 6...L-2 ;
- conducteur de la couche j dans l'encoche i étant connecté au conducteur de la couche j+1 ou j-1 dans l'encoche i-y dans le cas où j=3, 5...L-1 ;
- conducteur de la couche j dans l'encoche i étant connecté au conducteur de la couche j-1 dans l'encoche i+y ou à la couche 1 dans l'encoche i+y+1 ou i+y-1 dans le cas où j=L,
- conducteur de la couche j dans l'encoche i étant connecté au conducteur de la couche j+1 dans l'encoche i-y ou à la couche L dans l'encoche i-y+1 ou i-y-1 dans le cas où j=1,
où la valeur de i dépend de la phase de l'enroulement et du numéro de branche, et où i-y = i-y+Q lorsque i-y < 0 et i+y = i+y-Q lorsque i+y > Q.

2. Structure d'enroulement de stator (100) pour un moteur, le moteur étant un moteur à CA triphasé présentant huit pôles, comprenant des phases U, V et W ; dans laquelle chaque phase comprend quatre branches à enroulement parallèle : une première branche à enroulement parallèle, une deuxième branche à enroulement parallèle, une troisième branche à enroulement parallèle et une quatrième branche à enroulement parallèle, chaque branche à enroulement parallèle présentant une extrémité de tête et une extrémité de queue, les directions d'enroulement des première et troisième branches à enroulement parallèle étant identiques, et les directions d'enroulement des deuxième et quatrième branches à enroulement parallèle étant identiques et toutes deux opposées aux directions d'enroulement des première et troisième branches à enroulement parallèle, le moteur à CA triphasé étant capable de fonctionnement normal lorsqu'il est excité,
la structure d'enroulement de stator (100) étant agencée sur le noyau de stator (11), le noyau de stator (11) comprenant une pluralité d'encoches, l'enroulement de stator comprenant une pluralité de fils de cuivre plats en forme de U (10), dans lequel chaque fil de cuivre plat en forme de U comprend : un premier conducteur, un second conducteur sensiblement parallèle au premier conducteur, et une partie de connexion connectant le premier conducteur et le second conducteur ; dans lequel la partie de connexion de chaque fil de cuivre plat en forme de U agencé dans le moteur est située du même côté par rapport au moteur,
dans laquelle Q représente le nombre d'encoches du noyau de stator (11), les encoches étant numérotées dans le sens des aiguilles d'une montre ou dans le sens inverse des aiguilles d'une montre ; i représente un nombre naturel satisfaisant 1 ≤ i ≤ Q ; q représente le nombre d'encoches par pôle par phase et p représente le nombre
de pôles et p = 8 ; q = (Q/p)/3 et q = 1, 2, 3... et ainsi de suite ; L représente le nombre de couches de chaque encoche et les couches sont numérotées dans la direction radiale du noyau de stator (11) consécutivement et la couche la plus à l'intérieur j=1 et la couche la plus à l'extérieur j=L, où L est un nombre pair et L = 8 + 4*l, où l = 0, 1, 2, 3..., j est un nombre naturel satisfaisant 1 ≤ j ≤ L ; et y représente le pas du fil de cuivre plat en forme de U ; une couche dans une encoche correspondant à un conducteur,
vu du côté de l'extrémité à souder, deux conducteurs étant soudés ensemble pour former un moteur CA triphasé à 8 pôles et comprenant quatre branches à enroulement parallèle par phase sont connectés ainsi :
- conducteur de la couche j dans l'encoche i étant connecté au conducteur de la couche j+1 dans l'encoche i+y dans le cas où j est impair et j=1, 3, 5...L-1,
- conducteur de la couche j dans l'encoche i étant connecté au conducteur de la couche j-1 dans l'encoche i-y dans le cas où j est pair et j=2, 4, 6...L,
vu du côté du moteur avec la partie de connexion, deux conducteurs sont connectés à un déflecteur (12) ou à une partie de connexion ainsi :
- conducteur de la couche j dans l'encoche i étant connecté au conducteur de la couche j+1 ou j-1 dans l'encoche i+y dans le cas où j=2, 4, 6...L-2,
- conducteur de la couche j dans l'encoche i étant connecté au conducteur de la couche j+1 ou j-1 dans l'encoche i-y dans le cas où j=3, 5...L-1,
- conducteur de la couche j dans l'encoche i étant connecté au conducteur de la couche j-1 dans l'encoche i+y ou à un conducteur de la couche 1 dans l'encoche i+y+1 ou i+y-1 dans le cas où j=L,
- conducteur de la couche j dans l'encoche i étant connecté au conducteur de la couche j+1 dans l'encoche i-y ou à la couche L dans l'encoche i-y+1 ou i-y-1 dans le cas où j=1,
où la valeur de i dépend de la phase de l'enroulement et du numéro de branche et où i-y = i-y+Q lorsque i-y < 0 et i+y = i+y-Q lorsque i+y > Q.

3. Structure d'enroulement de stator (100) selon la revendication 1 ou 2, dans laquelle chacun des conducteurs de la première branche d'enroulement parallèle et de la troisième branche d'enroulement parallèle au niveau d'extrémités de tête est situé dans une couche impaire d'encoche i±2ky, respectivement, où k=0, 1, 2, 3... et ainsi de suite ;
et dans laquelle chacun des conducteurs de la deuxième branche à enroulement parallèle et de la quatrième branche à enroulement parallèle au niveau d'extrémités de tête est situé dans une couche paire de stator i±2ky, où k=0, 1, 2, 3... et ainsi de suite.

4. Structure d'enroulement de stator (100) selon la revendication 1 ou 2, dans laquelle les extrémités de tête et de queue de la première branche d'enroulement parallèle, de la deuxième branche d'enroulement parallèle, de la troisième branche d'enroulement parallèle et de la quatrième branche d'enroulement parallèle sont situées dans la couche 1 ou la couche L.

5. Structure d'enroulement de stator (100) selon la revendication 1 ou 2, dans laquelle les extrémités de tête de deux des quatre branches d'enroulement parallèles sont situées dans la couche 1 et la couche L de l'encoche i respectivement ; et les extrémités de tête des deux autres des quatre branches d'enroulement parallèles sont situées dans la couche 1 et la couche L de l'encoche i+Q/2, respectivement.

6. Structure d'enroulement de stator (100) selon la revendication 1 ou 2, dans laquelle la structure d'enroulement de stator (100) est conçue comme une structure d'enroulement de type Y connectée de manière queue à queue ou une structure d'enroulement de type delta connectée de manière tête à queue.

7. Structure d'enroulement de stator (100) selon la revendication 1 ou 2, dans laquelle la structure d'enroulement de stator (100) est une structure d'enroulement à pas complet, une structure d'enroulement à pas court ou une structure d'enroulement à pas long.

8. Moteur comprenant une structure d'enroulement de stator (100) selon l'une quelconque des revendications 1 à 7.

9. Moteur selon la revendication 8, dans lequel le moteur comprend 48 encoches de stator, chaque encoche de stator présentant 8 couches.

10. Moteur selon la revendication 9, dans lequel la phase U comprend quatre branches à enroulement parallèle : une première branche à enroulement parallèle de phase U, une deuxième branche à enroulement parallèle de phase U, une troisième branche à enroulement parallèle de phase U et une quatrième branche à enroulement parallèle de phase U ; « ^ » représentant une connexion avec la partie de connexion d'un fil de cuivre plat en forme de U, « - » représentant une connexion par soudure, « ↔ » représentant une connexion par déflecteur (12), et « i.j » désignant la couche j dans l'encoche i ; et dans lequel
la première branche d'enroulement parallèle de phase U est connectée ainsi :
1.1^7.2-13.1^19.2-25.3^31.4-37.3^43.4-1.5^7.6-13.5^19.6-25.7^31.8-37.7^43.8↔2.1^8.2-14.1^20.2-26.3^32.4-38.3^44.4-2.5^8.6-14.5^20.6-26.7^32.8-38.7^44.8 ;
la deuxième branche d'enroulement parallèle de phase U est connectée ainsi :
1.8^43.7-37.8^31.7-25.6^19.5-13.6^7.5-1.4^43.3-37.4^31.3-25.2^19.1-13.2^7.1↔2.8^44.7-38.8^32.7-26.6^20.5-14.6^8.5-2.4^44.3-38.4^32.3-26.2^20.1-14.2^8.1 ;
la troisième branche d'enroulement parallèle de phase U est connectée ainsi :
25.1^31.2-37.1^43.2-1.3^7.4-13.3^19.4-25.5^31.6-37.5^43.6-1.7^7.8-13.7^19.8↔26.1^32.2-38.1^44.2-2.3^8.4-14.3^20.4-26.5^32.6-38.5^44.6-2.7^8.8-14.7^20.8 ;
la quatrième branche d'enroulement parallèle de phase U est connectée ainsi :
25.8^19.7-13.8^7.7-1.6^43.5-37.6^31.5-25.4^19.3-13.4^7.3-1.2^43.1-37.2^31.1↔26.8^20.7-14.8^8.7-2.6^44.5-38.6^32.5-26.4^20.3-14.4^8.3-2.2^44.1-38.2^32.1.

11. Moteur selon la revendication 9, dans lequel la phase U comprend quatre branches à enroulement parallèle : une première branche à enroulement parallèle de phase U, une deuxième branche à enroulement parallèle de phase U, une troisième branche à enroulement parallèle de phase U et une quatrième branche à enroulement parallèle de phase U ; « ^ » représentant une connexion avec la partie de connexion d'un fil de cuivre plat en forme de U, « - » représentant une connexion par soudure, « ↔ » représentant une connexion par déflecteur (12), et « i.j » désignant la couche j dans l'encoche i ; et dans lequel
la première branche d'enroulement parallèle de phase U est connectée ainsi :
13.1^19.2-25.3^31.4-37.3^43.4-1.5^7.6-13.5^19.6-25.7^31.8-37.7^43.8↔2.1^8.2-14.1^20.2-26.3^32.4-38.3^44.4-2.5^8.6-14.5^20.6-26.7^32.8-38.7^44.8↔1.1^7.2 ;
la deuxième branche d'enroulement parallèle de phase U est connectée ainsi :
1.8^43.7-37.8^31.7-25.6^19.5-13.6^7.5-1.4^43.3-37.4^31.3-25.2^19.1-13.2^7.1↔2.8^44.7-38.8^32.7-26.6^20.5-14.6^8.5-2.4^44.3-38.4^32.3-26.2^20.1-14.2^8.1 ;
la troisième branche d'enroulement parallèle de phase U est connectée ainsi :
13.3^19.4-25.5^31.6-37.5^43.6-1.7^7.8-13.7^19.8↔26.1^32.2-38.1^44.2-2.3^8.4-14.3^20.4-26.5^32.6-38.5^44.6-2.7^8.8-14.7^20.8↔25.1^31.2-37.1^43.2-1.3^7.4 ;
la quatrième branche d'enroulement parallèle de phase U est connectée ainsi :
1.6^43.5-37.6^31.5-25.4^19.3-13.4^7.3-1.2^43.1-37.2^31.1↔26.8^20.7-14.8^8.7-2.6^44.5-38.6^32.5-26.4^20.3-14.4^8.3-2.2^44.1-38.2^32.1↔25.8^19.7-13.8^7.7.

12. Moteur selon la revendication 9, dans lequel la phase U comprend quatre branches à enroulement parallèle : une première branche à enroulement parallèle de phase U, une deuxième branche à enroulement parallèle de phase U, une troisième branche à enroulement parallèle de phase U et une quatrième branche à enroulement parallèle de phase U ; « ^ » représentant une connexion avec la partie de connexion d'un fil de cuivre plat en forme de U, « - » représentant une connexion par soudure, « ↔ » représentant une connexion par déflecteur (12), et « i.j » désignant la couche j dans l'encoche i ; et dans lequel
la première branche d'enroulement parallèle de phase U est connectée ainsi :
8.1-14.2^20.1-26.2^32.3-38.4^44.3-2.4^8.5-14.6^20.5-26.6^32.7-38.8^44.7-2.8↔7.1-13.2^19.1-25.2^31.3-37.4^43.3-1.4^7.5-13.6^19.5-25.6^31.7-37.8^43.7-1.8 ;
la deuxième branche d'enroulement parallèle de phase U est connectée ainsi :
44.8-38.7^32.8-26.7^20.6-14.5^8.6-2.5^44.4-38.3^32.4-26.3^20.2-14.1^8.2-2.1↔43.8-37.7^31.8-25.7^19.6-13.5^7.6-1.5^43.4-37.3^31.4-25.3^19.2-13.1^7.2-1.1 ;
la troisième branche d'enroulement parallèle de phase U est connectée ainsi :
32.1-38.2^44.1-2.2^8.3-14.4^20.3-26.4^32.5-38.6^44.5-2.6^8.7-14.8^20.7-26.8↔31.1-37.2^43.1-1.2^7.3-13.4^19.3-25.4^31.5-37.6^43.5-1.6^7.7-13.8^19.7-25.8 ;
la quatrième branche d'enroulement parallèle de phase U est connectée ainsi :
20.8-14.7^8.8-2.7^44.6-38.5^32.6-26.5^20.4-14.3^8.4-2.3^44.2-38.1^32.2-26.1↔19.8-13.7^7.8-1.7^43.6-37.5^31.6-25.5^19.4-13.3^7.4-1.3^43.2-37.1^31.2-25.1.

13. Véhicule comprenant un moteur selon l'une quelconque des revendications 8 à 12.
